(19) Europäisches Patentamt
European Patent Office
Office européen des brevets

(11) EP 2 230 284 B1

(12) # EUROPEAN PATENT SPECIFICATION

(45) Date of publication and mention of the grant of the patent:
**03.08.2011 Bulletin 2011/31**

(51) Int Cl.:
***C09D 11/10*** *(2006.01)*

(21) Application number: **10156779.0**

(22) Date of filing: **17.03.2010**

(54) **Ink composition and inkjet recording method**

Composition d'encre et procédé d'enregistrement à jet d'encre

Tintenzusammensetzung und Tintenaufzeichnungsverfahren

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **17.03.2009 JP 2009064673**

(43) Date of publication of application:
**22.09.2010 Bulletin 2010/38**

(73) Proprietor: **Fujifilm Corporation**
**Minato-ku**
**Tokyo (JP)**

(72) Inventor: **Oshima, Yasuhito**
**Ashigarakami-gun Kanagawa (JP)**

(74) Representative: **Grünecker, Kinkeldey, Stockmair & Schwanhäusser**
**Anwaltssozietät**
**Leopoldstrasse 4**
**80802 München (DE)**

(56) References cited:
**EP-A1- 1 903 080**
**EP-A1- 1 964 893**
**EP-A1- 1 992 669**
**US-A1- 2008 075 882**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to an ink composition suitably used for inkjet recording and an inkjet recording method.

With regard to an image recording method for forming an image on a recording medium such as paper based on an image data signal, there are an electrophotographic system, sublimation type and melt type thermal transfer systems, an inkjet system, etc. In the electrophotographic system, a process of forming an electrostatic latent image on a photosensitive drum by electrically charging and exposing is required, and the system is complicated; as a result, there is the problem that the production cost is high. With regard to the thermal transfer system, although the equipment is inexpensive, due to the use of an ink ribbon there is the problem that the running cost is high and waste material is generated.

On the other hand, with regard to the inkjet system, the equipment is inexpensive and, since an image is formed directly on a recording medium by discharging an ink composition only on a required image area, the ink composition can be used efficiently and the running cost is low. Furthermore, there is little noise and it is excellent as an image recording system.

In recent years, a solvent-free type inkjet recording method in which drawing by inkjet is carried out using an ink composition that is curable by irradiation with radiation such as UV rays (radiation curing type ink composition) and the ink is then cured by irradiation with radiation such as UV rays has been attracting attention.

In general, compared with an aqueous ink containing water as a diluent or a solvent-based ink containing an organic solvent as a diluent, an inkjet recording method employing a radiation curing type ink makes it possible to draw on a non-absorbing recording medium such as a glass, metal, or plastic recording medium, and has merits such as a wide recording medium application range, excellent scratch resistance and solvent resistance of a drawn image, high sensitivity, excellent productivity and, because it does not contain a volatile solvent, a low burden on the environment.

The curing mechanism for radiation curing type inks can be roughly divided into the radical polymerization type and the cationic polymerization type, and since the radical polymerization type has merits such as excellent storage stability and low cost compared with the cationic polymerization type, it is widely used in the market.

Radical polymerization type ink compositions are described in, e.g., JP-PCT-2001-525479 (JP-PCT denotes a published Japanese translation of a PCT application), JP-A-2004-182930 (JP-A denotes a Japanese unexamined patent application publication), JP-PCT-2004-514014, JP-A-2006-299117, and JP-A-2008-75062 described below.

JP-PCT-2001-525479 discloses a radiation curable inkjet ink having a viscosity not greater than 35 mpa·s at 30°C as measured using a Brookfield Viscometer fitted with a small sample adaptor having a No. 18 spindle and a rotational speed of 60 rpm, giving a shear rate of 79.2 $sec^{-1}$, and comprising a colorant component, a diluent consisting essentially of reactive liquid material and, optionally, at least one photopolymerization catalyst and wherein the reactive liquid material is formed of both monofunctional and polyfunctional material and comprises 5 to 30% by weight of at least one oligomer.

JP-A-2004-182930 discloses a photopolymerizable inkjet ink containing a photopolymerizable resin consisting only of photopolymerizable monomers, photopolymerization initiator and colorant, and not containing a solvent, wherein, the photopolymerization monomers contain 10-30 wt % hexafunctional monomer based on the total amount of the ink, and uses any of a difunctional monomer, or the difunctional monomer with a monofunctional monomer, or the difunctional monomer with a trifunctional monomer, or the difunctional monomer with the monofunctional monomer and the trifunctional monomer, as the photopolymerizable monomers other than the hexafunctional monomer.

JP-PCT-2004-514014 discloses an inkjettable, radiation curable inkjet ink composition, comprising: (a) an oligo/resin component; (b) a radiation curable, reactive diluent comprising (i) 0.1 to 50 weight percent of an adhesion promoting, radiation curable component comprising one or more heterocyclic, radiation curable monomer and/or an alkoxylated monomer comprising pendant alkoxylated functionality and no main chain alkoxylated functionality and (ii) no more than about 10 weight percent of an optional alkoxylated, radiation curable monomer comprising main-chain alkoxylated functionality.

JP-A-2006-299117 discloses a photocurable inkjet comprising; (a) an acrylate monomer having a dicyclopentenyl group represented by Formula (1), (b) an *N*-vinyl lactam monomer represented by Formula (2), (c) other photocurable compound copolymerizable with the above both monomers (a) and (b), a photopolymerization initiator for curing the inkjet ink by polymerizing these compounds (a) to (c) by means of the photoirradiation, and a coloring material.

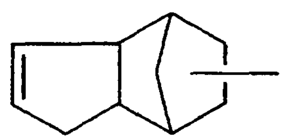

(1)

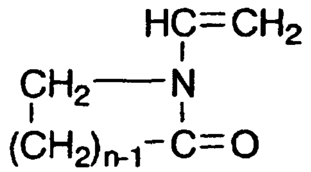

(2)

(in the formula, n denotes 1 to 7.)

JP-A-2008-75062 discloses an ink composition comprising; (A) *N*-vinyl lactams, (B) a monomer represented by Formula (I) or Formula (II), and (C) a radical polymerization initiator.

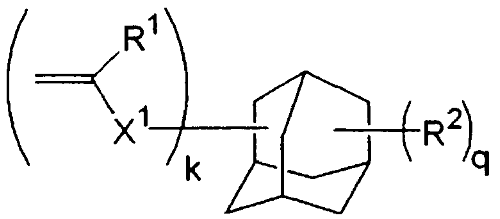

( I )

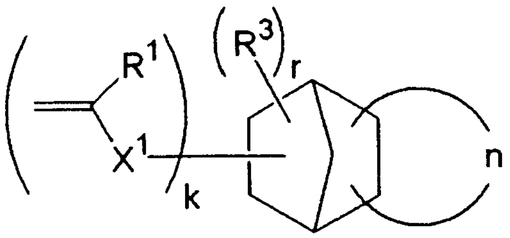

( II )

(in Formula (I) and Formula (II), $R^1$ denotes a hydrogen atom, a halogen atom, or an alkyl group having 1 to 4 carbons, $X^1$ denotes a divalent linking group, $R^2$ and $R^3$ independently denote a substituent, k denotes an integer of 1 to 6, q and r are each independently an integer of 0 to 5, n is a cyclic hydrocarbon structure, the cyclic hydrocarbon structure may comprise in addition to hydrocarbon bonds a carbonyl bond (-C(O)-) and/or an ester bond (-C(O)O-), and the k $R^1$ s, the k $X^1$s, and the r $R^3$s may each be identical to or different from each other; furthermore, one carbon atom in the adamantane framework in Formula (I) may be replaced by a carbonyl bond (-C(O)-) and/or an ester bond (-C(O) O-), and one carbon atom in the norbornene framework in Formula (II) may be replaced by an ether bond (-O-) and/or an ester bond (-C(O)O-).)

Since a conventional radical polymerization type ink composition is susceptible to inhibition of polymerization by oxygen in the atmosphere and becomes undercured, with a large amount of unwanted polymerizable compound (also called monomer) remaining after irradiation with radiation, from the viewpoint of image strength (scratch resistance, solvent resistance) of a cured printed material it cannot yet be said to have sufficient performance in practice, and further improvement is desired. Furthermore, since a radical polymerization type ink composition does not contain any solvent and substantially all of the ink components cure on a recording medium, the image becomes uneven, and a smooth feel is easily impaired. A conventional radical polymerization type ink composition that is satisfactory in terms of the image quality of a recorded printed material has not yet been obtained.

It is an object of the present invention to provide an ink composition that has an excellent cure rate for irradiation with actinic radiation while having good storage stability, has high image quality for a cured image, has excellent flexibility and scratch resistance, shows high adhesion to a recording medium, and also has stable inkjet discharge properties, and an inkjet recording method employing the ink composition.

The above-mentioned object of the present invention has been attained by means described from <1> to <14> below.

<1> An ink composition comprising: (A) a radically polymerizable compound; (B) a radical polymerization initiator; and (C) a colorant; the radically polymerizable compound (A) comprising at least one type of compound represented

by Formula (Ia) and/or compound represented by Formula (Ib) and at least one type of compound represented by Formula (II)

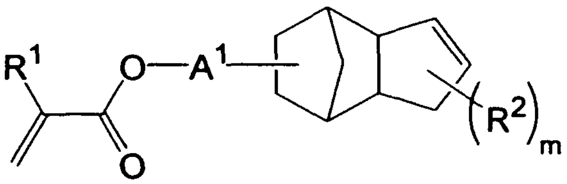

( Ia )

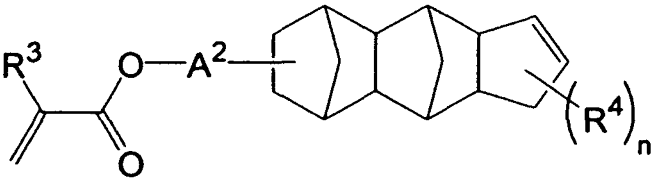

( Ib )

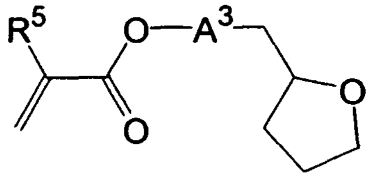

( II )

wherein $R^1$, $R^3$, and $R^5$ independently denote a hydrogen atom or a methyl group, $A^1$ to $A^3$ independently denote a single bond or a divalent linking group, $R^2$ and $R^4$ independently denote a monovalent substituent, m denotes an integer of 0 to 13, n denotes an integer of 0 to 19, when m is an integer of 2 to 13 the $R^2$s may be identical to or different from each other, and when n is an integer of 2 to 19 the $R^4$s may be identical to or different from each other,

<2> the ink composition according to <1>, wherein the radically polymerizable compound (A) comprises only (meth) acrylic acid ester compounds,

<3> the ink composition according to <1> or <2>, wherein the total content of the compound represented by Formula (Ia) and the compound represented by Formula (Ib) is 15 to 55 wt % in the ink composition,

<4> the ink composition according to any one of <1> to <3>, wherein the content of the compound represented by Formula (II) is 5 to 45 wt % in the ink composition,

<5> the ink composition according to any one of <1> to <4>, wherein it comprises as the radically polymerizable compound (A) at least one type of (meth)acrylic acid ester compound other than the compound represented by Formula (Ia), Formula (Ib), or Formula (II),

<6> the ink composition according to <5>, wherein it comprises a (meth)acrylic acid ester compound other than the compound represented by Formula (Ia), Formula (Ib), or Formula (II) at 1 to 30 wt % in the ink composition,

<7> the ink composition according to <5> or <6>, wherein the radically polymerizable compound (A) comprises a polyfunctional (meth)acrylic acid ester compound,

<8> the ink composition according to <5> or <6>, wherein the radically polymerizable compound (A) comprises a 3- to 6-functional (meth)acrylic acid ester compound,

<9> the ink composition according to <7>, wherein the content of the polyfunctional (meth)acrylic acid ester compound is in the range of 1 to 25 wt % of the total weight of the ink composition,

<10> the ink composition according to any one of <1> to <9>, wherein the radically polymerizable compound (A) comprises a compound represented by Formula (Ib),

<11> the ink composition according to any one of <1> to <10>, wherein the content of the radical polymerization initiator (B) is 1 to 25 wt % relative to the total weight of the ink composition,

<12> the ink composition according to any one of <1> to <11>, wherein the colorant (C) is a pigment, and the ink composition comprises a pigment dispersing agent,

<13> the ink composition according to any one of <1> to <12>, wherein the content of the colorant (C) is 0.1 to 30 wt % relative to the total weight of the ink composition, and

<14> an inkjet recording method comprising: ($a^1$) a step of discharging the ink composition according to any one of <1> to <13> onto a recording medium; and ($b^1$) a step of curing the ink composition by irradiating the discharged

ink composition with actinic radiation.

In accordance with the present invention, there can be provided an ink composition that has an excellent cure rate for irradiation with actinic radiation while having good storage stability, has high image quality for a cured image, has excellent flexibility and scratch resistance, shows high adhesion to a recording medium, and also has stable inkjet discharge properties, and an inkjet recording method employing the ink composition.

(1) Ink composition

The ink composition of the present invention (hereinafter, also simply called an 'ink') comprising of the present invention comprises (A) a radically polymerizable compound, (B) a radical polymerization initiator, and (C) a colorant, the radically polymerizable compound (A) comprising at least one type of compound represented by Formula (Ia) and/or compound represented by Formula (Ib) and at least one type of compound represented by Formula (II).

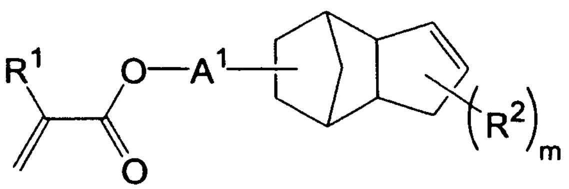

(Ia)

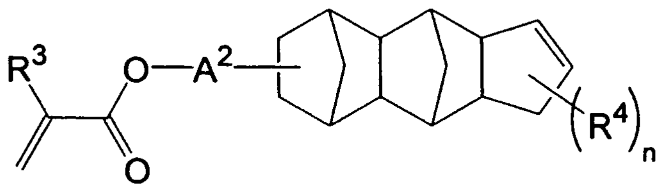

(Ib)

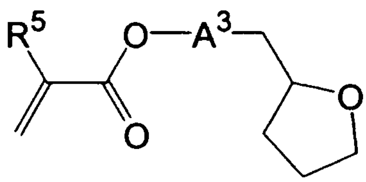

(II)

(in Formula (Ia), Formula (Ib), and Formula (II), $R^1$, $R^3$, and $R^5$ independently denote a hydrogen atom or a methyl group, $A^1$ to $A^3$ independently denote a single bond or a divalent linking group, $R^2$ and $R^4$ independently denote a monovalent substituent, m denotes an integer of 0 to 13, n denotes an integer of 0 to 19, when m is an integer of 2 to 13 the $R^2$s may be identical to or different from each other, and when n is an integer of 2 to 19 the $R^4$s may be identical to or different from each other.)

The ink composition of the present invention is suitably used as the inkjet recording ink composition.

The present invention is described in detail below. In the present invention, the description 'A to B' expressing a range of numerical values means 'not less than A but not more than B'. That is, it expresses a range of numerical values that includes the endpoints A and B.

The ink composition of the present invention is an ink composition that can cure upon exposure to radiation and is also an oil-based ink composition.

The 'radiation' referred to in the present invention is not particularly limited as long as it is actinic radiation that can provide energy that enables an initiating species to be generated in the ink composition when irradiated, and broadly includes $\alpha$ rays, $\gamma$ rays, X rays, ultraviolet rays (UV), visible light, and an electron beam; among these, ultraviolet rays and an electron beam are preferable from the viewpoint of curing sensitivity and the availability of equipment, and ultraviolet rays are particularly preferable. The ink composition of the present invention is therefore preferably an ink composition that can cure upon exposure to ultraviolet rays as radiation. (A) Radically polymerizable compound

The ink composition of the present invention comprises as the radically polymerizable compound (A) at least one type of compound represented by Formula (Ia) and/or compound represented by Formula (Ib) and at least one type of compound represented by Formula (II).

Furthermore, the ink composition of the present invention may comprise a radically polymerizable compound other than the compound represented by Formula (Ia), Formula (Ib), or Formula (II), and preferably comprises at least one type of (meth)acrylic acid ester compound other than the compound represented by Formula (Ia), Formula (Ib), or Formula (II).

<Compound represented by Formula (Ia) and compound represented by Formula (Ib)>

The ink composition of the present invention comprises as the radically polymerizable compound (A) at least one type of compound represented by Formula (Ia) and/or compound represented by Formula (Ib).

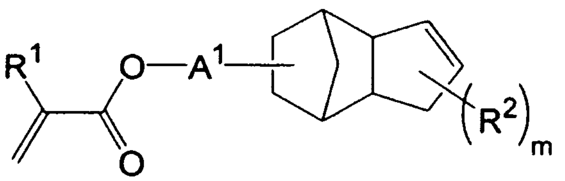

(Ia)

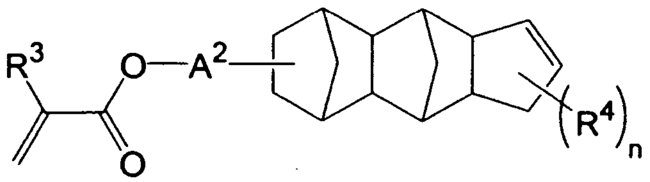

(Ib)

(in Formula (Ia), and Formula (Ib), $R^1$ and $R^3$ independently denote a hydrogen atom or a methyl group, $A^1$ and $A^2$ independently denote a single bond or a divalent linking group, $R^2$ and $R^4$ independently denote a monovalent substituent, m denotes an integer of 0 to 13, n denotes an integer of 0 to 19, when m is an integer of 2 to 13 the $R^2$s may be identical to or different from each other, and when n is an integer of 2 to 19 the $R^4$s may be identical to or different from each other.)

$R^1$ and $R^3$ in Formula (Ia) and Formula (Ib) independently denote a hydrogen atom or a methyl group, and in terms of cure rate are preferably hydrogen atoms.

$A^1$ and $A^2$ in Formula (Ia) and Formula (Ib) independently denote a single bond or a divalent linking group.

The divalent linking group is preferably $-R^6-$, $-R^6-O-$, $-R^6-CO-$, $-R^6-COO-$, $-R^6-CONR^7-$, $-R^6-NR^7-$, $-R^6-NR^7CO-$, $-R^6-NR^7COO-$, $-R^6-NR^7CONR^8-$, or a group in which these are combined. When it is a group in which these are combined, $R^6$ to $R^8$ in the combined divalent linking group may be identical to or different from each other.

$R^6$ denotes a divalent hydrocarbon group having 1 to 20 carbon atoms.

Examples of the divalent hydrocarbon group having 1 to 20 carbon atoms include hydrocarbon groups formed by removing two hydrogen atoms forming the hydrocarbons below, which may have a monovalent substituent that is described later.

Examples of the hydrocarbon include an aliphatic hydrocarbon and an aromatic hydrocarbon.

Preferred examples of the aliphatic hydrocarbon include aliphatic hydrocarbons having 1 to 40 carbon atoms such as methane, ethane, propane, butane, pentane, hexane, heptane, octane, nonane, decane, dodecane, octadecane, cyclopropane, cyclobutane, cyclopentane, cyclohexane, bicyclo[3.2.1]octane, spiro[4.5]decane, adamantane, bornane, norbornane, cis- or trans-hydrindane, cis- or trans-decahydronaphthalene, exo- or endo-tricyclo[5.2.1.$0^{2,6}$]decane, ethylene, propylene, 1-butene, 1-hexene, 1-heptadecene, 2-butene, 2-hexene, 4-nonene, 7-tetradecene, butadiene, piperylene, 1,9-decadiene, cyclopentene, cyclohexene, cyclooctene, 1,4-cyclohexadiene, 1,5-cyclooctadiene, 1,5,9-cyclododecatriene, 2-bornene, 2-norbornene, exo- or endo-tricyclo[5.2.1.$0^{2,6}$]dec-3-ene, octahydronaphthalene, tricyclo[6.2.1.$0^{2,7}$]undec-4-ene, tetracyclo[6.2.1.$1^{3,6}$.$0^{2,7}$]dodec-4-ene, bicyclo[2.2.1]hepta-2,5-diene, 3a,4,7,7a-tetrahydroindene, acetylene, 1-propyne, and 2-hexyne.

Preferred examples of the aromatic hydrocarbon include aromatic hydrocarbons such as benzene, naphthalene, anthracene, phenanthrene, pyrene, acenaphthylene, triphenylene, indene, fluorene, and 1,2,3,4-tetrahydronaphthalene.

Furthermore, the divalent hydrocarbon group having 1 to 20 carbon atoms denoted by $R^6$ may be a hydrocarbon group (e.g. a 4,4'-biphenylene group) formed by removing two hydrogen atoms from a hydrocarbon in which two or more of the above hydrocarbons are combined (in this case, the total number of carbon atoms after the combination being 1 to 20).

Moreover, one or more carbon atoms forming such a hydrocarbon group may be replaced by a hetero atom

selected from an oxygen atom, a nitrogen atom, or a sulfur atom.

From the viewpoint of flexibility, the divalent linking group is preferably $-R^6-O-$, $-R^6-COO-$, $-R^6-NR^7COO-$, or a group in which these are combined, and more preferably $-R^6-O-$ in which $R^6$ is a straight chain or branched alkyl group having 1 to 5 carbon atoms, or a group in which two or more $-R^6-O-$ are combined.

$R^7$ and $R^8$ independently denote a hydrogen atom or a monovalent hydrocarbon group having 1 to 20 carbon atoms.

Examples of the monovalent hydrocarbon group having 1 to 20 carbon atoms include hydrocarbon groups formed by removing one hydrogen atom from the above hydrocarbons. The monovalent hydrocarbon group having 1 to 20 carbon atoms may have a monovalent substituent that is described later.

The monovalent substituent that $R^6$ to $R^8$ may have has the same meaning as that of a monovalent substituent in $R^2$ and $R^4$, which are described later, and a preferred range is also the same.

In Formula (Ia), and Formula (Ib), $R^2$ and $R^4$ independently denote a monovalent substituent. When m is an integer of 2 to 13, the plural $R^2$s may be identical to or different from each other, and when n is an integer of 2 to 19, the plural $R^4$s may be identical to or different from each other.

Examples of the monovalent substituent in $R^2$ and $R^4$ include a halogen atom (-F, -Br, -Cl, -I), a hydroxy group, an alkoxy group, an aryloxy group, a mercapto group, an alkylthio group, an arylthio group, an alkyldithio group, an aryldithio group, an amino group, an *N*-alkylamino group, an *N,N*-dialkylamino group, an *N*-arylamino group, an *N, N*-diarylamino group, an *N*-alkyl-*N*-arylamino group, an acyloxy group, a carbamoyloxy group, an *N*-alkylcarbamoyloxy group, an *N*-arylcarbamoyloxy group, an *N,N*-dialkylcarbamoyloxy group, an *N,N*-diarylcarbamoyloxy group, an *N*-alkyl-*N*-arylcarbamoyloxy group, an alkylsulfoxy group, an arylsulfoxy group, an acylthio group, an acylamino group, an *N*-alkylacylamino group, an *N*-arylacylamino group, a ureido group, an *N'*-alkylureido group, an *N',N'*-dialkylureido group, an *N'*-arylureido group, an *N',N'*-diarylureido group, an *N'*-alkyl-*N'*-arylureido group, an *N*-alkylureido group, an *N*-arylureido group, an *N'*-alkyl-*N*-alkylureido group, an *N'*-alkyl-*N*-arylureido group, an *N',N'*-dialkyl-*N*-alkylureido group, an *N',N'*-dialkyl-*N*-arylureido group, an *N'*-aryl-*N*-alkylureido group, an *N'*-aryl-*N*-arylureido group, an *N',N*-diaryl-*N*-alkylureido group, an *N',N'*-diaryl-*N*-arylureido group, an *N'*-alkyl-*N'*-aryl-*N*-alkylureido group, an *N'*-alkyl-*N'*-aryl-N-arylureido group, an alkoxycarbonylamino group, an aryloxycarbonylamino group, an *N*-alkyl-*N*-alkoxycarbonylamino group, an *N*-alkyl-*N*-aryloxycarbonylamino group, an *N*-aryl-*N*-alkoxycarbonylamino group, an *N*-aryl-*N*-aryloxycarbonylamino group, a formyl group, an acyl group, a carboxy group and its conjugate base group, an alkoxycarbonyl group, an aryloxycarbonyl group, a carbamoyl group, an *N*-alkylcarbamoyl group, an *N,N*-dialkylcarbamoyl group, an *N*-arylcarbamoyl group, an *N,N*-diarylcarbamoyl group, an *N*-alkyl-*N*-arylcarbamoyl group, an alkylsulfinyl group, an arylsulfinyl group, an alkylsulfonyl group, an arylsulfonyl group, a sulfo group ($-SO_3H$) and its conjugate base group, an alkoxysulfonyl group, an aryloxysulfonyl group, a sulfinamoyl group, an *N*-alkylsulfinamoyl group, an *N,N*-dialkylsulfinamoyl group, an *N*-arylsulfinamoyl group, an *N,N*-diarylsulfinamoyl group, an *N*-alkyl-*N*-arylsulfinamoyl group, a sulfamoyl group, an *N*-alkylsulfamoyl group, an *N,N*-dialkylsulfamoyl group, an *N*-arylsulfamoyl group, an *N,N*-diarylsulfamoyl group, an *N*-alkyl-*N*-arylsulfamoyl group, *N*-acylsulfamoyl group and its conjugate base group, *N*-alkylsulfonylsulfamoyl group ($-SO_2NHSO_2$(alkyl)) and its conjugated base group, *N*-arylsulfonylsufamoyl group ($-SO_2NHSO_2$(aryl)) and its conjugated base group, *N*-alkylsulfonylcarbamoyl group (-CO $NHSO_2$(alkyl)) and its conjugated base group, *N*-arylsulfonylcarbamoyl group (-CO $NHSO_2$(aryl)) and its conjugated base group, an alkoxysilyl group ($-Si(O\text{-alkyl})_3$), an aryloxysilyl group ($-Si(O\text{-aryl})_3$), a hydroxysilyl group ($-Si(OH)_3$) and its conjugate base group, a phosphono group ($-PO_3H_2$) and its conjugate base group, a dialkylphosphono group ($-PO(O\text{-alkyl})_2$), a diarylphosphono group ($-PO(O\text{-aryl})_2$), an alkylarylphosphono group (-PO(O-alkyl)(O-aryl)), a monoalkylphosphono group (-PO(O-alkyl)OH) and its conjugate base group, a monoarylphosphono group (-PO(O-aryl)OH) and its conjugate base group, a phosphonooxy group ($-OPO_3H_2$) and its conjugate base group, a dialkylphosphonooxy group ($-OPO(O\text{-alkyl})_2$), a diarylphosphonooxy group ($-OPO(O\text{-aryl})_2$), an alkylarylphosphonooxy group (-OPO(O-alkyl)(O-aryl)), a monoalkylphosphonooxy group (-OPO(O-alkyl)OH) and its conjugate base group, a monoarylphosphonooxy group (-OPO(O-aryl)OH) and its conjugate base group, a cyano group, and a nitro group, a dialkyl boryl group ($-B(\text{alkyl})_2$), a diaryl boryl group ($-B(\text{aryl})_2$), an alkyl aryl boryl group (-B(alkyl)(aryl)), a dihydroxy boryl group ($-B(OH)_2$) and its conjugate base group, an alkyl hydroxy boryl group (-B(alkyl)(OH)) and its conjugate base group, an aryl hydroxy boryl group (-B(aryl)(OH)) and its conjugate base group, an aryl group, an alkyl group, an alkenyl group and an alkynyl group.

When these monovalent substituents contain a carbon atom, the number of carbon atoms is preferably 1 to 20, more preferably 1 to 10, and particularly preferably 1 to 5.

From the viewpoint of cure rate and discharge stability, the compound represented by Formula (Ia) or Formula (Ib) preferably does not have a monovalent substituent denoted by $R^2$ or $R^4$ (m = n = 0) or, when m or n is 1 or more, is preferably one in which the monovalent substituent is a halogen atom, or an alkoxy group, aryloxy group, alkyl group, alkenyl group, or aryl group having 1 to 40 carbon atoms.

The substitution number m of $R^2$ in Formula (Ia) denotes an integer of 0 to 13, preferably 0 to 8, more preferably 0 to 2, and particularly preferably 0, meaning there is no $R^2$ in Formula (Ia).

The substitution number n of $R^2$ in Formula (Ia) denotes an integer of 0 to 19, preferably 0 to 8, more preferably

0 to 2, and particularly preferably 0, meaning there is no $R^2$ in Formula (Ib).

$A^1$ and $R^2$ in Formula (Ia) may be linked to any position of the tricyclo[5.2.1.$0^{2,6}$]dec-3-ene structure (also called a 'dicyclopentenyl structure'), which is shown below.

$A^2$ and $R^4$ in Formula (Ib) may be linked to any position of the pentacyclo[6.5.1.$1^{3,6}$.$0^{2,7}$.$0^{9,13}$]pentadec-11-ene structure (also called a 'tricyclopentenyl structure'), which is shown below.

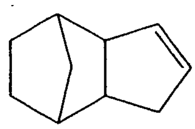

Tricyclo[5.2.1.$0^{2,6}$]dec-3-ene

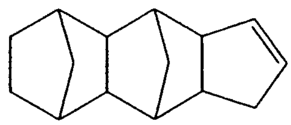

Pentacyclo[6.5.1.$1^{3,6}$.$0^{2,7}$.$0^{9,13}$]pentadec-11-ene

With regard to the compound represented by Formula (Ia) and the compound represented by Formula (Ib), the ink composition of the present invention may comprise only the compound represented by Formula (Ia), may comprise only the compound represented by Formula (Ib), or may comprise both the compound represented by Formula (Ia) and the compound represented by Formula (Ib).

With regard to the compound represented by Formula (Ia), one type thereof may be used on its own or two or more types thereof may be used in combination. Furthermore, with regard to the compound represented by Formula (Ib), one type thereof may be used on its own or two or more types thereof may be used in combination.

From the viewpoint of inkjet discharge properties, the ink composition of the present invention preferably contains a compound represented by Formula (Ia).

Furthermore, from the viewpoint of storage stability, the ink composition of the present invention preferably contains a compound represented by Formula (Ib).

Specific examples of the compound represented by Formula (Ia) are cited below, but the present invention should not be construed by being limited thereto.

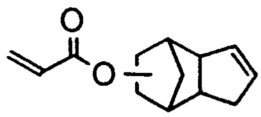

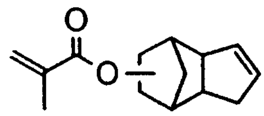

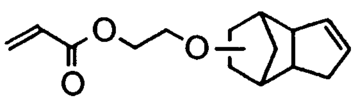

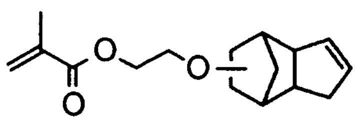

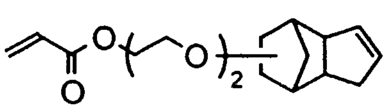

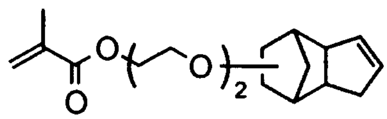

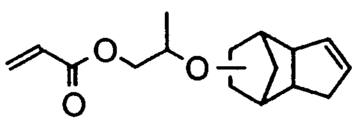

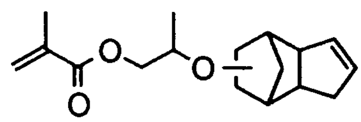

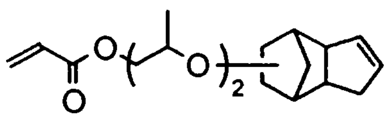

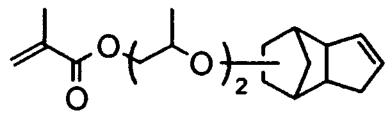

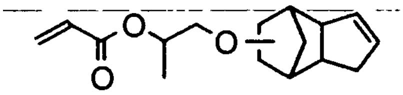

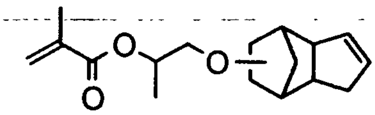

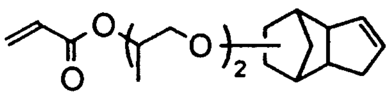

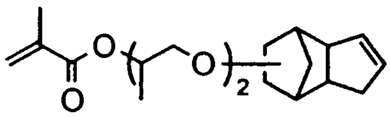

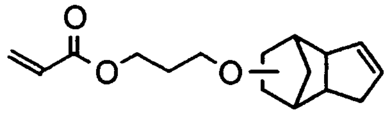

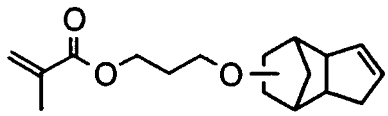

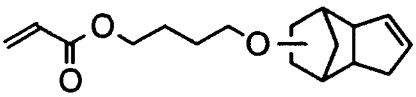

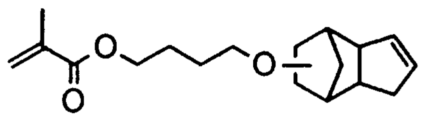

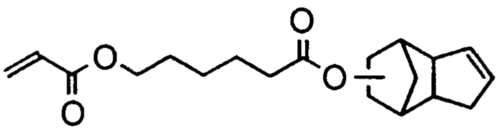

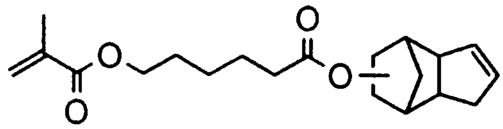

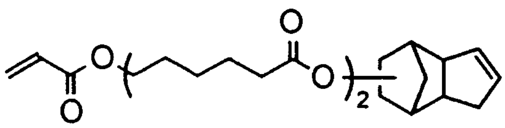

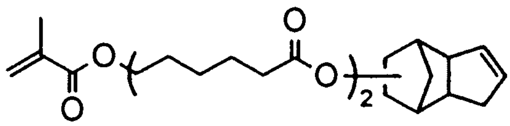

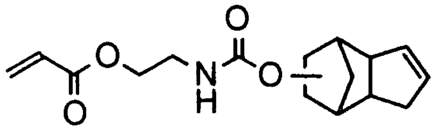

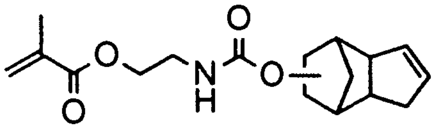

Specific examples of the compound represented by Formula (Ib) are cited below, but the present invention should not be construed by being limited thereto.

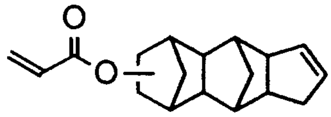

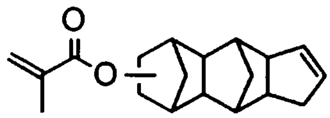

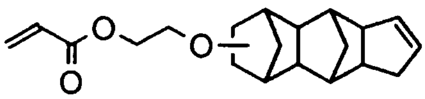

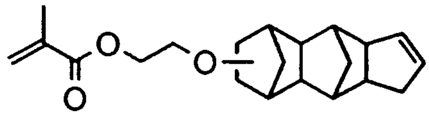

The compound represented by Formula (Ia) is available, for example, as FANCRYL FA-511A, FANCRYL FA-512A, FANCRYL-512AS, and FANCRYL FA-512M (all manufactured by Hitachi Chemical Co., Ltd.)

Furthermore, the compound represented by Formula (Ib) is available, for example, as TCPD-A, TCPD-M, TOE-A, and TOE-M (all manufactured by Hitachi Chemical Co., Ltd.)

The total content of the compound represented by Formula (Ia) and the compound represented by Formula (Ib) in the ink composition of the present invention is, relative to the total weight of the ink composition, preferably in the range of 15 to 55 wt %, more preferably in the range of 20 to 50 wt %, and yet more preferably in the range of 25 to 45 wt %. When the total content is at least 15 wt % the cure rate and scratch resistance are excellent, and when the total content is no greater than 55 wt % the storage stability, flexibility, and inkjet discharge properties are excellent.

<Compound represented by Formula (II)>

The ink composition of the present invention comprises as radically polymerizable compound (A) at least one compound represented by Formula (II).

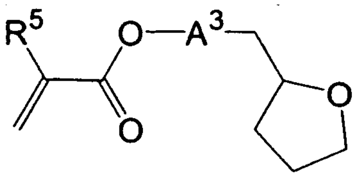

( II )

(in Formula (II), $R^5$ denotes a hydrogen or a methyl group, and $A^3$ denotes a single bond or a divalent linking group.)

$R^5$ in Formula (II) denotes a hydrogen or a methyl group, and preferably a hydrogen from the viewpoint of cure rate.

$A^3$ in Formula (II) denotes a single bond or a divalent linking group.

Preferred structures of $A^3$ are the same with those of $A^1$ in Formula (Ia) and $A^2$ in Formula (Ib).

Specific examples of the compound represented by Formula (II) are cited below, but the present invention should not be construed by being limited thereto.

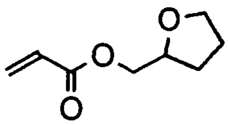

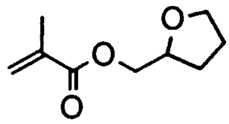

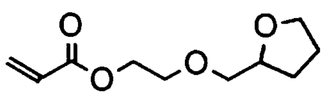

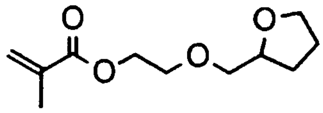

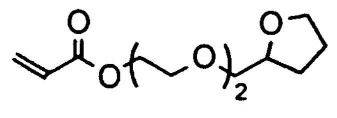

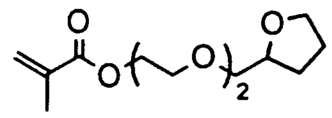

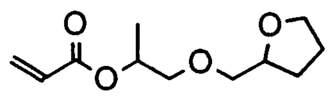

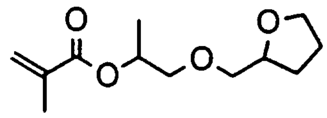

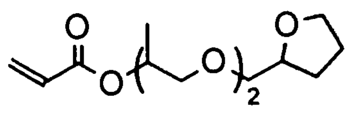

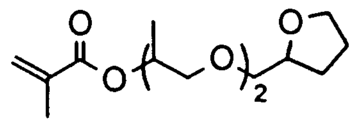

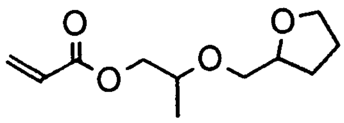

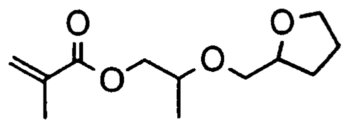

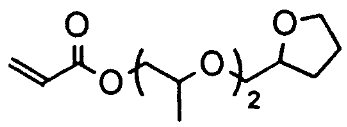

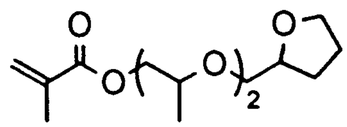

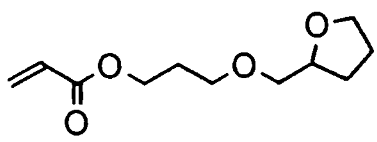

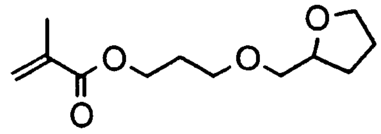

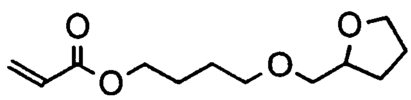

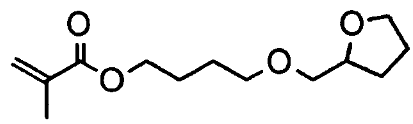

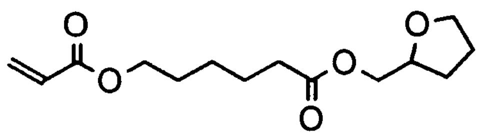

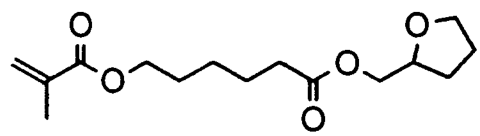

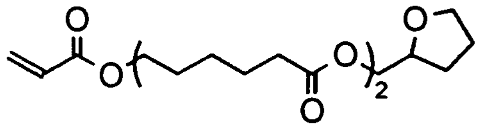

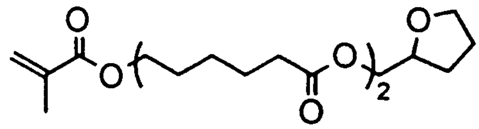

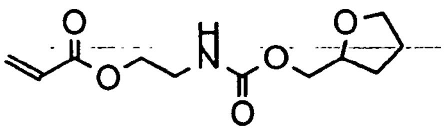

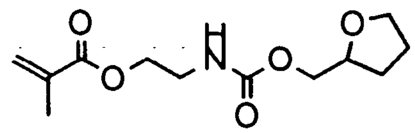

Furthermore, the compound represented by Formula (II) is available, for example, as SR285, CD611, SR203 (all manufactured by Sartomer Japan Inc.), and KAYARAD TC-110S (Nippon Kayaku Co., Ltd.).

The content of the compound represented by Formula (II) in the ink composition of the present invention is, relative to the total weight of the ink composition, preferably in the range of 5 to 45 wt %, more preferably in the range of 10 to 40 wt %, and yet more preferably in the range of 15 to 35 wt %. When the content is at least 5 wt % adhesion to a recording medium is excellent, and when the content is no greater than 45 wt % the cure rate and scratch resistance are excellent.

Furthermore, the compound represented by Formula (Ia), Formula (Ib) or Formula (II) may be produced by a known synthetic method described in, for example, US Pat. No.3,087,962, J. Chem. Soc., Chem. Commun., Vol. 14: pp. 1073 to 1074 (1986), US Pat. No. 4,097,677, New Journal of Chemistry, Vol. 17, No. 12: pp. 835 to 841 (1993).

<Other polymerizable compound>

The ink composition of the present invention may comprise a radically polymerizable compound other than the compound represented by Formula (Ia), Formula (Ib), or Formula (II), and preferably comprises a (meth)acrylic acid ester compound other than the compound represented by Formula (Ia), Formula (Ib), or Formula (II).

With regard to the radically polymerizable compound contained in the ink composition of the present invention, it is preferable that at least 90 wt % thereof are (meth)acrylic acid ester compounds, it is more preferable that at least 95 wt % thereof are (meth)acrylic acid ester compounds, and it is particularly preferable that all thereof are (meth)acrylic acid ester compounds.

The (meth)acrylic acid ester compounds include those having the chemical configuration of monomer, oligomer, polymer, etc.

With regard to the (meth)acrylic acid ester compound other than the compound represented by Formula (Ia), Formula (Ib), or Formula (II), only one type thereof may be used or two or more types thereof may be used in combination at any ratio in order to improve target properties.

In the present specification, when either one of or both 'acrylic' and 'methacrylic' are referred to they may be expressed as '(meth)acrylic', and when either one of or both 'acrylate' and 'methacrylate' are referred to they may be expressed as '(meth)acrylate'.

Specific examples thereof include monofunctional or polyfunctional (meth)acrylic acid ester compounds such as methyl (meth)acrylate, ethyl (meth)acrylate, 2-ethylhexyl (meth)acrylate, *n*-octyl (meth)acrylate, *n*-nonyl (meth)acrylate, *n*-decyl (meth)acrylate, isooctyl (meth)acrylate, *n*-lauryl (meth)acrylate, n-tridecyl (meth)acrylate, *n*-cetyl (meth)acrylate, *n*-stearyl (meth)acrylate, isostearyl (meth)acrylate, cyclohexyl (meth)acrylate, isobornyl (meth)acrylate, adamantyl (meth)acrylate, vinyl (meth)acrylate, allyl (meth)acrylate, phenyl (meth)acrylate, benzyl (meth)acrylate, 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, 2-methoxyethyl (meth)acrylate, dicyclopentanyloxyethyl (meth)acrylate, 2-phenoxyethyl (meth)acrylate, 2-(2-phenoxyethoxy)ethyl (meth)acrylate, 2-((2-phenyl)benzeneoxy)ethyl (meth)acrylate, 2-dimethylaminoethyl (meth)acrylate, 2-diethylaminoethyl (meth)acrylate, (poly)ethylene glycol mono(meth)acrylate, (poly)ethylene glycol di(meth)acrylate, (poly)ethylene glycol (meth)acrylate methyl ester, (poly)ethylene glycol (meth)acrylate ethyl ester, (poly)ethylene glycol (meth)acrylate phenyl ester, (poly)propylene glycol mono(meth)acrylate, (poly)propylene glycol di(meth)acrylate, (poly)propylene glycol (meth)acrylate methyl ester, (poly)propylene glycol (meth)acrylate ethyl ester, (poly)propylene glycol (meth)acrylate phenyl ester, (poly)propylene glycol diglycidyl ether acrylic acid adduct, 1,4-butanediol di(meth)acrylate, 1,6-hexanediol di(meth)acrylate, 1,9-nonanediol di(meth)acrylate, 1,10-decanediol di(meth)acrylate, neopentyl glycol di(meth)acrylate, bisphenol A EO (ethylene oxide) adduct di(meth)acrylate, bisphenol A PO (propylene oxide) adduct di(meth)acrylate, ethoxylated neopentyl glycol di(meth)acrylate, propoxylated neopentyl glycol

di(meth)acrylate, bis((meth)acryloxyethyl) isocyanurate, tris((meth)acryloxyethyl) isocyanurate, trimethylolpropane tri(meth)acrylate, EO-modified trimethylolpropane tri(meth)acrylate, PO-modified trimethylolpropane tri(meth)acrylate, caprolactone-modified trimethylolpropane tri(meth)acrylate, pentaerythritol tri(meth)acrylate, EO-modified pentaerythritol tri(meth)acrylate, PO-modified pentaerythritol tri(meth)acrylate, caprolactone-modified pentaerythritol tri(meth)acrylate, pentaerythritol tetra(meth)acrylate, EO-modified pentaerythritol tetra(meth)acrylate, PO-modified pentaerythritol tetra(meth)acrylate, caprolactone-modified pentaerythritol tetra(meth)acrylate, dipentaerythritol tetra(meth)acrylate, EO-modified dipentaerythritol tetra(meth)acrylate, PO-modified dipentaerythritol tetra(meth)acrylate, caprolactone-modified dipentaerythritol tetra(meth)acrylate, dipentaerythritol hepta(meth)acrylate, EO-modified dipentaerythritol hepta(meth)acrylate, PO-modified dipentaerythritol hepta(meth)acrylate, caprolactone-modified dipentaerythritol hepta(meth)acrylate, dipentaerythritol hexa(meth)acrylate, EO-modified dipentaerythritol hexa(meth)acrylate, PO-modified dipentaerythritol hexa(meth)acrylate, caprolactone-modified dipentaerythritol hexa(meth)acrylate, FANCRYL FA-513A (dicyclopentanyl acrylate), FANCRYL FA-513M (dicyclopentanyl methacrylate), FANCRYL FA-711MM (pentamethyl piperidinyl methacrylate), and FANCRYL FA-712HM (tetramethylpiperidinyl methacrylate) manufactured by Hitachi Chemical Co., Ltd., and the SR & CD series of functional monomers and, sold as functional oligomers, the CN series, manufactured by Sartomer Japan Inc.

More specifically, radically polymerizable or crosslinkable methacrylic acid ester monomers, oligomers, prepolymers, and polymers that are commercial products or are industrially known, such as those described in 'Kakyozai Handobukku' (Crosslinking Agent Handbook), Ed. S. Yamashita (Taiseisha, 1981); 'UV-EB Koka Handobukku (Genryohen)' (UV·EB Curing Handbook (Starting Materials)) Ed. K. Kato (Kobunshi Kankoukai, 1985); 'UV·EB Koka Gijutsu no Oyo to Shijyo' (Application and Market of UV·EB Curing Technology), p. 79, Ed. RadTech (CMC, 1989); and E. Takiyama 'Poriesuteru Jushi Handobukku' (Polyester Resin Handbook), (The Nikkan Kogyo Shimbun Ltd., 1988) may be used.

Furthermore, as the radically polymerizable compound, for example, photocuring type polymerizable compounds used in photopolymerizable compositions described in publications such as JP-A-7-159983 (JP-A denotes a Japanese unexamined patent application publication), JP-B-7-31399 (JP-B denotes a Japanese examined patent application publication), JP-A-8-224982, JP-A-10-863, JP-A-9-134011, and published Japanese translation 2004-514014 of a PCT application are known, and (meth)acrylic acid esters described therein may also be applied to the ink composition of the present invention.

Among them, preferred examples include isobornyl (meth)acrylate, 2-phenoxyethyl (meth)acrylate, PO-modified neopentyl glycol di(meth)acrylate, 1,6-hexanediol di(meth)acrylate, dipropylene glycol di(meth)acrylate, trimethylolpropane tri(meth)acrylate, caprolactone-modified dipentaerythritol hexa(meth)acrylate, and a urethane (meth)acrylate oligomer.

From the viewpoint of cure rate and flexibility, the content of the (meth)acrylic acid ester compound other than the compound represented by Formula (Ia), Formula (Ib), or Formula (II) in the ink composition of the present invention is, relative to the total weight of the ink composition, preferably in the range of 1 to 50 wt %, more preferably in the range of 1 to 40 wt %, and yet more preferably in the range of 1 to 30 wt %.

From the viewpoint of high cure rate and high image strength, the (meth)acrylic acid ester compound other than the compound represented by Formula (Ia), Formula (Ib), or Formula (II) preferably comprises a di- or higher-functional polyfunctional (meth)acrylic acid ester compound, and more preferably a tri- to hexa-functional (meth)acrylic acid ester compound.

When a polyfunctional (meth)acrylic acid ester is contained, the content of the polyfunctional (meth)acrylic acid ester compound is, relative to the total weight of the ink composition, preferably in the range of 1 to 25 wt %, more preferably in the range of 3 to 20 wt %, and yet more preferably in the range of 5 to 15 wt %.

As the radically polymerizable compound, a radically polymerizable compound other than the above-mentioned (meth)acrylic acid ester compounds may be used in the ink composition of the present invention.

Examples of the radically polymerizable compound other than the above-mentioned (meth)acrylic acid ester compounds include a (meth)acrylamide compound, an *N*-vinyl compound, a vinyl ether compound, a vinyl ester compound, an ester compound of an unsaturated carboxylic acid such as itaconic acid, crotonic acid, isocrotonic acid, or maleic acid, a polybutadiene compound, and a styrene compound.

Specific examples of the (meth)acrylamide compound include (meth)acrylamide, *N*-methyl (meth)acrylamide, *N*-isopropyl (meth)acrylamide, *N*-*t*-butyl (meth)acrylamide, *N*-cyclohexyl (meth)acrylamide, *N*-dodecyl (meth)acrylamide, *N*,*N*-dimethyl (meth)acrylamide, *N*,*N*-diethyl (meth)acrylamide, *N*-phenyl (meth)acrylamide, *N*-(hydroxymethyl) (meth)acrylamide, *N*-(2-hydroxyethyl) (meth)acrylamide, *N*-(meth)acryloylmorpholine, *N*-(3-dimethylaminopropyl) (meth)acrylamide, *N*-(1,1-dimethyl-3-oxobutyl) (meth)acrylamide, *N*-(butoxymethyl) (meth)acrylamide, *N*-(4-hydroxyphenyl) (meth)acrylamide, *N*,*N'*-(1,2-dihydroxyethylene) bis(meth)acrylamide, *N*,*N'*-methylenebis(meth)acrylamide.

Specific examples of the *N*-vinyl compound include *N*-vinylformamide, *N*-vinylacetoamide, *N*-methyl-*N*-vinylacetoamide, *N*-methyl-*N*-vinylformamide, *N*-vinyl pyrrolidone, *N*-vinylcaprolactam, *N*-vinylvalerolactam, and *N*-vinylimidazole.

Specific examples of the vinyl ether compound include di- or tri-vinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether; and monovinyl ether compounds such as ethyl vinyl ether, *n*-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, *n*-propyl vinyl ether, isopropyl vinyl ether, isopropenyl vinyl ether, dodecyl vinyl ether, diethylene glycol monovinyl ether, octadecyl vinyl ether, ethylene glycol monovinyl ether, triethylene glycol monovinyl ether, hydroxyethyl monovinyl ether, and hydroxynonyl monovinyl ether.

Specific examples of the vinyl ester include divinyl 1,4-cyclohexane dicarboxylate, vinyl pivalate, p-vinyl anisate, vinyl 3-cyclohexene carboxylate, divinyl adipate, divinyl terephtalate, divinyl 1,3-adamantanedicarboxylate, tetravinyl 1,1,2,3-propanetetracarboxylate, tetravinyl bicyclo[2,2,2] oct-7-ene-2,3,5,6-tetracarboxylate, vinyl methacrylate, divinyl 5-norbornene-2,3-dicarboxylate, tetravinyl 1,2,4,5-cyclohexane tetracarboxylate, divinyl 2,5-pyridine-dicarboxylate.

From the viewpoint of storage stability and image quality, the content of the radically polymerizable compound other than the (meth)acrylic acid ester compound in the ink composition of the present invention is, relative to the total weight of the ink composition, preferably in the range of 0 to 15 wt %, more preferably in the range of 0 to 10 wt %, and yet more preferably in the range of 0 to 5 wt %, and it is particularly preferably not contained. (B) Radical polymerization initiator

The ink composition of the present invention comprises a radical polymerization initiator (B). As a radical polymerization initiator that can be used in the present invention, a known radical polymerization initiator may be used. The radical polymerization initiator that can be used in the present invention may be used singly or in a combination of two or more types

The radical polymerization initiator that can be used in the ink composition of the present invention is a compound that forms a radical polymerization initiating species by absorbing external energy. The external energy used for initiating polymerization can be broadly divided into heat and actinic radiation, and a thermal polymerization initiator and a photopolymerization initiator are used respectively. Examples of the actinic radiation include $\gamma$ rays, $\beta$ rays, an electron beam, ultraviolet rays, visible light, and infrared rays.

Examples of the radical polymerization initiator that can be used in the present invention include (a) an aromatic ketone, (b) an acylphosphine compound, (c) an aromatic onium salt compound, (d) an organic peroxide, (e) a thio compound, (f) a hexaarylbiimidazole compound, (g) a ketoxime ester compound, (h) a borate compound, (i) an azinium compound, (j) a metallocene compound, (k) an active ester compound, and (l) a compound having a carbon-halogen bond. With regard to these radical polymerization initiators, the above-mentioned compounds (a) to (l) may be used singly or in combination. The radical polymerization initiator in the present invention may suitably be used singly or in a combination of two or more types.

Preferred examples of the aromatic ketone (a) and the thio compound (e) include a compound having a benzophenone skeleton (benzophenone compound) or a compound having a thioxanthone skeleton (thioxanthone compound) described in 'RADIATION CURING IN POLYMER SCIENCE AND TECHNOLOGY' J. P. FOUASSIER J. F. RABEK (1993), pp. 77 to 117. Preferred examples of the aromatic ketone (a), the acylphosphine compound (b) and the thio compound (e) include an $\alpha$-thiobenzophenone compound described in JP-B-47-6416, a benzoin ether compound described in JP-B-47-3981, an $\alpha$-substituted benzoin compound described in JP-B-47-22326, a benzoin derivative described in JP-B-47-23664, an aroylphosphonic acid ester described in JP-A-57-30704, a dialkoxybenzophenone described in JP-B-60-26483, benzoin ethers described in JP-B-60-26403 and JP-A-62-81345, $\alpha$-aminobenzophenones described in JP-B-1-34242, US Pat. No. 4,318,791, and EP No. 0284561A1, *p*-di(dimethylaminobenzoyl)benzene described in JP-A-2-211452, a thio-substituted aromatic ketone described in JP-A-61-194062, an acylphosphine sulfide described in JP-B-2-9597, an acylphosphine described in JP-B-2-9596, a thioxanthone described in JP-B-63-61950, and a coumarin described in JP-B-59-42864.

As the aromatic onium salt compound (c), there can be cited aromatic onium salts of elements of Groups 15, 16, and 17 of the periodic table, specifically, N, P, As, Sb, Bi, O, S, Se, Te, and I. Examples thereof include iodonium salts described in EP No. 104143, US Pat. No. 4,837,124, JP-A-2-150848, and JP-A-2-96514, diazonium salts (optionally substituted benzenediazoniums, etc.) described in EP Nos. 370693, 233567, 297443, 297442, 279210, and 422570, US Pat. Nos. 3,902,144, 4,933,377, 4,760,013, 4,734,444, and 2,833,827, diazonium salt resins (diazodiphenylamine formaldehyde resins, etc.), *N*-alkoxypyridinium salts, etc. (e.g. those described in US Pat. No. 4,743,528, JP-A-63-138345, JP-A-63-142345, JP-A-63-142346, and JP-B-46-42363; specific examples thereof include 1-methoxy-4-phenylpyridinium tetrafluoroborate); furthermore, compounds described in JP-B-52-147277, 52-14278, and 52-14279 may suitably be used. A radical or an acid is formed as an active species.

As the organic peroxide (d), almost all organic compounds having at least one oxygen-oxygen bond per molecule can be cited, and preferred examples thereof include peroxide ester compounds such as 3,3',4,4'-tetra(t-butylperoxycarbonyl)benzophenone, 3,3',4,4'-tetra(t-amylperoxycarbonyl)benzophenone, 3,3',4,4'-tetra(t-hexylperoxycarbonyl) benzophenone, 3,3',4,4'-tetra(t-octylperoxycarbonyl)benzophenone, 3,3',4,4'-tetra(cumylperoxycarbonyl)benzophenone, 3,3',4,4'-tetra(p-isopropylcumylperoxycarbonyl)benzophenone, and di-t-butyldiperoxyisophthalate.

As the hexaarylbiimidazole compound (f), there can be cited lophine dimers described in JP-B-45-37377 and JP-B-44-86516, and examples thereof include 2,2'-bis(*o*-chlorophenyl)-4,4',5,5'-tetraphenylbiimidazole, 2,2'-bis(*o*-bromophenyl)-4,4',5,5'-tetraphenylbiimidazole, 2,2'-bis(*o,p*-dichlorophenyl)-4,4',5,5'-tetraphenylbiimidazole, 2,2'-bis(*o*-chlorophenyl)-4,4',5,5'-tetra(m-methoxyphenyl)biimidazole, 2,2'-bis(*o,o*'-dichlorophenyl)-4,4',5,5'-tetraphenylbiimidazole, 2,2'-bis(*o*-nitrophenyl)-4,4',5,5'-tetraphenylbiimidazole, 2,2'-bis(*o*-methylphenyl)-4,4',5,5'-tetraphenylbiimidazole, and 2,2'-bis(*o*-trifluorophenyl)-4,4',5,5'-tetraphenylbiimidazole.

As the ketoxime ester compound (g), there can be cited 3-benzoyloxyiminobutan-2-one, 3-acetoxyiminobutan-2-one, 3-propionyloxyiminobutan-2-one, 2-acetoxyiminopentan-3-one, 2-acetoxyimino-1-phenylpropan-1-one, 2-benzoyloxyimino-1-phenylpropan-1-one, 3-*p*-toluenesulfonyloxyiminobutan-2-one, and 2-ethoxycarbonyloxyimino-1-phenylpropan-1-one.

Examples of the borate compound (h) include compounds described in US Pat. Nos. 3,567,453 and 4,343,891, and EP Nos. 109,772 and 109,773.

Examples of the azinium salt compound (i) include N-O bond-containing compounds described in JP-A-63-138345, JP-A-63-142345, JP-A-63-142346, JP-A-63-143537, and JP-B-46-42363.

Examples of the metallocene compound (j) include titanocene compounds described in JP-A-59-152396, JP-A-61-151197, JP-A-63-41484, JP-A-2-249, and JP-A-2-4705, and iron-arene complexes described JP-A-1-304453 and JP-A-1-152109.

Specific examples of the titanocene compound include dicyclopentadienyl-Ti-dichloride, dicyclopentadienyl-Ti-bis-phenyl, di-cyclopentadienyl-Ti-bis-2,3,4,5,6-pentafluorophen-1-yl, dicyclopentadienyl-Ti-bis-2,3,5,6-tetrafluorophen-1-yl, dicyclopentadienyl-Ti-bis-2,4,6-trifluorophen-1-yl, dicyclopentadienyl-Ti-2,6-difluorophen-1-yl, dicyclopentadienyl-Ti-bis-2,4-difluorophen-1-yl, dimethylcyclopentadienyl-Ti-bis-2,3,4,5,6-pentafluorophen-1-yl, dimethylcyclopentadienyl-Ti-bis-2,3,5,6-tetrafluorophen-1-yl, dimethylcyclopentadienyl-Ti-bis-2,4-difluorophen-1-yl, bis(cyclopentadienyl)-bis(2,6-difluoro-3-(pyrr-1-yl)phenyl)titanium, bis(cyclopentadienyl)bis[2,6-difluoro-3-(methylsulfonamido)phenyl]titanium, and bis(cyclopentadienyl)bis[2,6-difluoro-3-(*N*-butylbiaroylamino)phenyl]titanium.

Examples of the active ester compound (k) include nitrobenzyl ester compounds described in EP Nos. 0290750, 046083, 156153, 271851, and 0388343, US Pat. Nos. 3,901,710 and 4,181,531, JP-A-60-198538, and JP-A-53-133022, iminosulfonate compounds described in EP Nos. 0199672, 84515, 199672, 044115, and 0101122, US Pat. Nos. 4,618,564, 4371605, and 4,431,774, JP-A-64-18143, JP-A-2-245756, and JP-A-4-365048, and compounds described in JP-B-62-6223, JP-B-63-14340, and JP-A-59-174831.

Preferred examples of the compound (l) having a carbon-halogen bond include a compound described in Wakabayashi et. al, Bull. Chem. Soc. Japan, 42, 2924 (1969), a compound described in British Patent No. 1388492, a compound described in JP-A-53-133428, and a compound described in German Patent No. 3337024.

Examples further include a compound described in F. C. Schaefer et al., J. Org. Chem., 29, 1527 (1964), a compound described in JP-A-62-58241, a compound described in JP-A-5-281728, a compound described in German Pat. No. 2641100, a compound described in German Pat. No. 3333450, compounds described in German Pat. No. 3021590, and compounds described in German Pat. No. 3021599.

In the ink composition of the present invention, the amount of radical polymerization initiator used is preferably 1 to 25 wt % relative to the total amount of the ink composition, more preferably 2 to 20 wt %, yet more preferably 3 to 15 wt %, and especially preferably 4 to 9 wt %. The ink composition can be cured sufficiently with 1 wt % or greater of the polymerization initiator, and a cured film having a uniform degree of curing can be obtained with 25 wt % or less.

(C) Colorant

The ink composition of the present invention comprises a colorant (C).

A colorant that can be used in the present invention is not particularly limited, and may be selected from any known colorant such as a pigment, an oil-soluble dye, a water-soluble dye and a disperse dye. Among them, as the colorant, a pigment and an oil-soluble dye, which have excellent weather resistance and rich color reproduction, are preferable, and a pigment is more preferable.

It is preferable that the colorant that can be suitably used in the ink composition or the inkjet recording ink composition of the present invention does not function as a polymerization inhibitor in a polymerization reaction, which is a curing reaction. This is because the sensitivity of the curing reaction by actinic radiation should not be degraded.

<Pigment>

The pigment is not particularly limited and may be selected appropriately according to an intended application; examples thereof include known organic and inorganic pigments, resin particles dyed with a dye, and a commercial pigment dispersion or a surface-treated pigment (e.g. one obtained by dispersing a pigment in water, a liquid organic

compound, an insoluble resin, etc. as a dispersion medium or one obtained by treating the surface of a pigment with a resin, a pigment derivative, etc.). Specific examples of the pigment include those described in, for example, 'Ganryo no Jiten' (Dictionary of Pigments) Ed. by Seijirou Ito (2000, Asakura), I Hashimoto 'Yuki Ganryo Handobukku' (Organic Pigment Handbook), (2006, Color Office), W. Herbst, K. Hunger 'Industrial Organic Pigments' (1992, Wiley-VHC), JP-A-2002-12607, JP-A-2002-188025, JP-A-2003-26978, and JP-A-2003-342503.

Examples of the organic pigment and the inorganic pigment include a yellow pigment, a red pigment, a magenta pigment, a blue pigment, a cyan pigment, a green pigment, an orange pigment, a violet pigment, a brown pigment, a black pigment, and a white pigment.

Examples of the yellow pigment include monoazo pigments such as C.I. Pigment Yellow 1, 2, 3, 4, 5, 10, 65, 73, 74, 75, 97, 98, 111, 116, 130, 167, and 205, monoazo lake pigments such as C.I. Pigment Yellow 61, 62, 100, 168, 169, 183, 191, 206, 209, and 212, disazo pigments such as C.I. Pigment Yellow 12, 13, 14, 16, 17, 55, 63, 77, 81, 83, 106, 124, 126, 127, 152, 155, 170, 172, 174, 176, 214, and 219, anthraquinone pigments such as C.I. Pigment Yellow 24, 99, 108, 193, and 199, monoazo pyrazolone pigments such as C.I. Pigment Yellow 60, condensed azo pigments such as C.I. Pigment Yellow 93, 95, 128, and 166, isoindoline pigments such as C.I. Pigment Yellow 109, 110, 139, 173, and 185, benzimidazolone pigments such as C.I. Pigment Yellow 120, 151, 154, 175, 180, 181, and 194, azomethine metal complex pigments such as C.I. Pigment Yellow 117, 129, 150, and 153, quinophthalone pigments such as C.I. Pigment Yellow 138, and quinoxaline pigments such as C.I. Pigment Yellow 213.

Preferred examples of the red or magenta pigment include monoazo lake pigments such as C.I. Pigment Red 193, disazo pigments such as C.I. Pigment Red 38, Naphthol AS pigments such as C.I. Pigment Red 2, 5, 8, 9, 10, 11, 12, 14, 15, 16, 17, 18, 22, 23, 31, 32, 112, 114, 146, 147, 150, 170, 184, 187, 188, 210, 213, 238, 245, 253, 256, 258, 266, 268, and 269, β-naphthol pigments such as C.I. Pigment Red 3, 4, and 6, β-naphthol lake pigments such as C.I. Pigment Red 49, 53, and 68, Naphthol AS lake pigments such as C.I. Pigment Red 237, 239, and 247, pyrazolone pigments such as C.I. Pigment Red 41, BONA lake pigments such as C.I. Pigment Red 48, 52, 57, 58, 63, 64:1, and 200, xanthene lake pigments such as C.I. Pigment Red 81:1, 169, and 172, thioindigo pigments such as C.I. Pigment Red 88, 181, and 279, perylene pigments such as C.I. Pigment Red 123, 149, 178, 179, 190, and 224, condensed azo pigments such as C.I. Pigment Red 144, 166, 214, 220, 221, 242, and 262, anthraquinone pigments such as C.I. Pigment Red 168, 177, 182, 226, and 263, anthraquinone lake pigments such as C.I. Pigment Red 83, benzimidazolone pigments such as C.I. Pigment Red 171, 175, 176, 185, and 208, quinacridone pigments such as C.I. Pigment Red 122, 202 (including a mixture with C.I. Pigment Violet 19), 207, and 209, diketopyrrolopyrrole pigments such as C.I. Pigment Red 254, 255, 264, 270, and 272, and azomethine metal complex pigments such as C.I. Pigment Red 257 and 271.

Preferred examples of the blue or cyan pigment include Naphthol AS pigments such as C.I. Pigment Blue 25 and 26, phthalocyanine pigments such as C.I. Pigment Blue 15, 15:1, 15:2, 15:3, 15:4, 15:6, 16, 17:1, 75, and 79, dye lake pigments such as C.I. Pigment Blue 1, 24:1, 56, 61, and 62, anthraquinone-based pigments such as C.I. Pigment Blue 60, indigo pigments such as C.I. Pigment Blue 63, and dioxazine pigments such as C.I. Pigment Blue 80.

Preferred examples of the green pigment include dye lake pigments such as C.I. Pigment Green 1 and 4, phthalocyanine pigments such as C.I. Pigment Green 7 and 36, and azomethine metal complex pigments such as C.I. Pigment Green 8.

Preferred examples of the orange pigment include monoazo pigments such as C.I. Pigment Orange 1, β-naphthol pigments such as C.I. Pigment Orange 2, 3, and 5, Naphthol AS pigments such as C.I. Pigment Orange 4, 24, 38, and 74, pyrazolone pigments such as C.I. Pigment Orange 13 and 34, benzimidazolone pigments such as C.I. Pigment Orange 36, 60, 62, 64, and 72, disazo pigments such as C.I. Pigment Orange 15 and 16, β-naphthol lake pigments such as C.I. Pigment Orange 17 and 46, naphthalenesulfonic acid lake pigments such as C.I. Pigment Orange 19, perinone pigments such as C.I. Pigment Orange 43, quinacridone pigments such as C.I. Pigment Orange 48 and 49, anthraquinone-based pigments such as C.I. Pigment Orange 51, isoindolinone pigments such as C.I. Pigment Orange 61, isoindoline-based pigments such as C.I. Pigment Orange 66, azomethine metal complex pigments such as C.I. Pigment Orange 68, and diketopyrrolopyrrole pigments such as C.I. Pigment Orange 71, 73, and 81.

Preferred examples of the brown pigment include BONA lake pigments such as C.I. Pigment Brown 5, condensed azo pigments such as C.I. Pigment Brown 23, 41, and 42, and benzimidazolone pigments such as C.I. Pigment Brown 25 and 32.

Preferred examples of the violet pigment include dye lake pigments such as C.I. Pigment Violet 1, 2, 3, and 27, Naphthol AS pigments such as C.I. Pigment Violet 13, 17, 25, and 50, anthraquinone lake pigments such as C.I. Pigment Violet 5:1, quinacridone pigments such as C.I. Pigment Violet 19, dioxazine pigments such as C.I. Pigment Violet 23 and 37, perylene pigments such as C.I. Pigment Violet 29, benzimidazolone pigments such as C.I. Pigment Violet 32, and thioindigo pigments such as C.I. Pigment Violet 38.

Preferred examples of the black pigment include indazine pigments such as C.I. Pigment Black 1, carbon black, which is C.I. Pigment Black 7, graphite, which is C.I. Pigment Black 10, magnetite, which is C.I. Pigment Black 11, anthraquinone pigments such as C.I. Pigment Black 20, and perylene pigments such as C.I. Pigment

Black 31 and 32.

Preferred examples of the white pigment include zinc oxide, which is C.I.

Pigment White 4, titanium oxide, which is C.I. Pigment White 6, zinc sulfide, which is C.I. Pigment White 7, zirconium oxide (zirconium white), which is C.I. Pigment White 12, calcium carbonate, which is C.I. Pigment White 18, aluminum oxide/silicon oxide (Kaolin clay), which is C.I. Pigment White 19, barium sulfate, which is C.I. Pigment White 21 or 22, aluminum hydroxide (alumina white), which is C.I. Pigment White 23, silicon oxide, which is C.I. Pigment White 27, and calcium silicate, which is C.I. Pigment White 28.

Inorganic particles that are used as a white pigment may be a single substance or composite particles with an oxide of silicon, aluminum, zirconium, titanium, etc., an organic metal compound, or an organic compound.

Among them, the titanium oxide is suitably used since, compared with other white pigments, it has low specific gravity, a large refractive index, high hiding power and coloring power, and excellent durability toward acid, alkali, and other environments. In addition to the titanium oxide, another white pigment (which may be a white pigment other than those described above) may be used in combination.

It is preferable for the pigment, the dispersant, and the dispersion medium to be selected and for dispersion conditions and filtration conditions to be set so that the average particle size of pigment particles is preferably 0.005 to 0.5 μm, more preferably 0.01 to 0.45 μm, and yet more preferably 0.015 to 0.4 μm. When the average particle size is within the above-mentioned range, clogging of a head nozzle can be suppressed, and the storage stability, the transparency, and the cure rate of the ink composition can be maintained.

<Oil-soluble dye>

The oil-soluble dye that can be used in the present invention is explained below.

The oil-soluble dye that can be used in the present invention means a dye that is substantially insoluble in water. Specifically, the solubility in water at 25°C (the mass of dye that can be dissolved in 100 g of water) is no greater than 1 g, preferably no greater than 0.5 g, and more preferably no greater than 0.1 g. Therefore, the oil-soluble dye means a so-called water-insoluble pigment or an oil-soluble dye, and among these the oil-soluble dye is preferable.

Among the oil-soluble dyes that can be used in the present invention, as a yellow dye, any may be used.

Examples thereof include aryl or heteryl azo dyes having a coupling component such as a phenol, a naphthol, an aniline, a pyrazolone, a pyridone, or an open-chain active methylene compound; azomethine dyes having a coupling component such as an open-chain active methylene compound; methine dyes such as benzylidene dyes and monomethineoxonol dyes; quinone dyes such as naphthoquinone dyes and anthraquinone dyes; and other dye species such as quinophthalone dyes, nitro/nitroso dyes, acridine dyes, and acridinone dyes.

Among the above-mentioned oil-soluble dyes that can be used in the present invention, as a magenta dye, any may be used.

Examples thereof include aryl or heteryl azo dyes having a coupling component such as a phenol, a naphthol, or an aniline; azomethine dyes having a coupling component such as a pyrazolone or a pyrazolotriazole; methine dyes such as arylidene dyes, styryl dyes, merocyanine dyes, and oxonol dyes; carbonium dyes such as diphenylmethane dyes, triphenylmethane dyes, and xanthene dyes; quinone dyes such as naphthoquinones, anthraquinones, or anthrapyridones; and condensed polycyclic dyes such as dioxazine dyes.

Among the oil-soluble dyes that can be used in the present invention, as a cyan dye, any may be used.

Examples thereof include indoaniline dyes, indophenol dyes, and azomethine dyes having a coupling component such as a pyrrolotriazole; polymethine dyes such as cyanine dyes, oxonol dyes, and merocyanine dyes; carbonium dyes such as diphenylmethane dyes, triphenylmethane dyes, and xanthene dyes; phthalocyanine dyes; anthraquinone dyes; aryl or heteryl azo dyes having a coupling component such as a phenol, a naphthol, or an aniline; and indigo/thioindigo dyes.

The above-mentioned dyes may be dyes that exhibit respective colors of yellow, magenta, and cyan only after a part of the chromophore dissociates, and in that case the counter cation may be an inorganic cation such as an alkali metal or ammonium, may be an organic cation such as pyridinium or a quaternary ammonium salt, or may be a polymer cation having the above cation as a partial structure.

Although not limited to the following, preferred specific examples of the oil-soluble dye include C.I. Solvent Black 3, 7, 27, 29, and 34; C.I. Solvent Yellow 14, 16, 19, 29, 30, 56, 82, 93, and 162; C.I. Solvent Red 1, 3, 8, 18, 24, 27, 43, 49, 51, 72, 73, 109, 122, 132, and 218; C.I. Solvent Violet 3; C.I. Solvent Blue 2, 11, 25, 35, 38, 67, and 70; C.I. Solvent Green 3 and 7; and C.I. Solvent Orange 2.

Particularly preferred examples thereof include Nubian Black PC-0850, Oil Black HBB, Oil Yellow 129, Oil Yellow 105, Oil Pink 312, Oil Red 5B, Oil Scarlet 308, Vali Fast Blue 2606, Oil Blue BOS (manufactured by Orient Chemical Industries, Ltd.), Aizen Spilon Blue GNH (manufactured by Hodogaya Chemical Co., Ltd.), Neopen Yellow 075, Neopen Magenta SE1378, Neopen Blue 808, Neopen Blue FF4012, and Neopen Cyan FF4238 (manufactured by BASF).

<Disperse dye>

Furthermore, in the present invention, a disperse dye may be used in a range that enables it to be dissolved in a water-immiscible organic solvent. Disperse dyes generally include water-soluble dyes, but in the present invention it is preferable for the disperse dye to be used in a range such that it dissolves in a water-immiscible organic solvent. Specific preferred examples of the disperse dye include C.I. Disperse Yellow 5, 42, 54, 64, 79, 82, 83, 93, 99, 100, 119, 122, 124, 126, 160, 184:1, 186, 198, 199, 201, 204, 224, and 237; C.I. Disperse Orange 13, 29, 31:1, 33, 49, 54, 55, 66, 73, 118, 119, and 163; C.I. Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356, and 362; C.I. Disperse Violet 33; C.I. Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365, and 368; and C.I. Disperse Green 6:1 and 9.

The colorant that can be used in the present invention may be used on its own or in a combination of two or more types.

In the present invention, the content of the colorant may be selected appropriately according to physical properties of the colorant (specific gravity, coloring power, color, etc.) and the color combination for the ink compositions to be used to form a printed material, but from the viewpoint of hiding power and coloring power it is preferably 0.1 to 30 wt %, more preferably 0.5 to 20 wt %, and particularly preferably 1 to 10 wt % relative to the weight of the entire ink composition.

In the ink composition of the present invention, it is preferable to use a pigment as a colorant, and when it is used it is preferable for the ink composition to contain a dispersant in order to disperse the pigment stably in the ink composition.

The dispersant that can be used in the present invention is preferably a polymeric dispersant. The 'polymeric dispersant' referred to in the present invention means a dispersant having a weight-average molecular weight of 1,000 or greater.

The main chain skeleton of the polymeric dispersant is not particularly limited; examples thereof include a polyurethane skeleton, a polyacrylic skeleton, a polyester skeleton, a polyamide skeleton, a polyimide skeleton, and a polyurea skeleton, and from the viewpoint of storage stability of the ink composition a polyurethane skeleton, a polyacrylic skeleton, and a polyester skeleton are preferable. Furthermore, the structure of the polymeric dispersant is not particularly limited; examples thereof include a random structure, a block structure, a comb structure, and a star structure, and similarly from the viewpoint of storage stability a block structure or a comb structure is preferable.

Examples of a polymeric dispersant include the DISPERBYK series, as a wetting agent commercially available from BYK Chemie Co., such as 101, 102, 103, 106, 108, 109, 110, 111, 112, 116, 130, 140, 142, 145, 161, 162, 163, 164, 166, 167, 168, 170, 171, 174, 180, 182, 183, 184, 185, 2000, 2001, 2020, 2050, 2070, 2096, and 2150; EFKA series, commercially available from Ciba Specialty Chemicals Inc., such as 4008, 4009, 4010, 4015, 4020, 4046, 4047, 4050, 4055, 4060, 4080, 4300, 4330, 4340, 4400, 4401, 4402, 4403, 4406, 4800, 5010, 5044, 5054, 5055, 5063, 5064, 5065, 5066, 5070, and 5244; Solsperse series, commercially available from The Lubrizol Corporation, such as 3000, 11200, 13240, 13650, 13940, 16000, 17000, 18000, 20000, 21000, 24000SC, 24000GR, 26000, 28000, 31845, 32000, 325000, 32550, 32600, 33000, 34750, 35100, 35200, 36000, 36600, 37500, 38500, 39000, 53095, 54000, 55000, 56000, and 71000; DISPARLON Series, commercially available from KUSUMOTO CHEMICALS, Ltd., such as 1210, 1220, 1831, 1850, 1860, 2100, 2150, 2200, 7004, KS-260, KS-273N, KS-860, KS-873N, PW-36, DN-900, DA-234, DA-325, DA-325, DA-375, DA-550, DA-1200, DA-1401, DA-7301; the AJISPAR series, commercially available from Ajinomoto Co., Inc., such as PB-711, PB-821, PB-822, PN-411, PA-111; Surfynol series, commercially available from Air Products and Chemicals, Inc., such as 104A, 104C, 104E, 104H, 104S, 104BC, 104DPM, 104PA, 104PG-50, 420, 440, DF110D, DF110L, DF37, DF58, DF75, DF210, CT111, CT121, CT131, CT136, GA, TG, TGE; OLFINE series, commercially available from Nissin Chemical Industry Co., LTD., such as STG, E104; SN-Sperse series commercially available from SAN NOPCO Ltd.; such as 70, 2120, 2190; ADEKACOL and ADEKATOL series, commercially available from ADEKA Corp; and SANNONIC series, NAROACTY CL series, EMULMIN series, NEWPOL PE series, IONET M series, IONET D series, IONET S series, IONET T series, and Sanseparer 100, all commercially available from Sanyo Chemical Industries, Ltd..

With regard to a preferred amount of dispersant added in the ink composition, when the weight of pigment in the ink composition is P and the weight of polymeric dispersant in the ink composition is D, the ratio by weight (D/P) is preferably $0.01 \leq D/P \leq 2.0$, more preferably $0.03 \leq D/P \leq 1.5$, and yet more preferably $0.05 \leq D/P \leq 0.6$. When in the above-mentioned range, aggregation/sedimentation of the pigment and increase in ink viscosity do not occur, and an ink composition having excellent storage stability, low ink viscosity, and excellent discharge stability is obtained.

When carrying out dispersion, it is also preferable to add, in addition to a dispersant, a dispersion adjuvant, which is generally called a synergist (e.g. 5000, 12000, and 22000 of the SOLSPERSE series commercially available from The Lubrizol Corporation, EFKA6745 commercially available from Ciba Specialty Chemicals, etc.), various types of surfactants, or an antifoaming agent, thus improving the dispersibility and wettability of the pigment.

In the present invention, when a pigment is used as the colorant, the pigment may be added directly together with other components when preparing an ink composition, but may be added as a pigment dispersion (also called a 'mill base') by adding and dispersing it in advance in a medium such as a commonly used organic solvent (methyl ethyl ketone, toluene, butanol, butyl acetate, etc.) or a liquid such as a radically polymerizable compound used in the present invention. In order to avoid the problems of degradation of scratch resistance and residual VOC (Volatile Organic Compound) due to the medium when it remains in a cured image, the pigment is preferably added after dispersing it in advance in a radically polymerizable compound. Furthermore, when taking into consideration workability during formulation, it is preferable to select as the medium used a radically polymerizable compound having the lowest viscosity.

In the present invention, when dispersion of a pigment is carried out, it is preferable to mix the pigment with a dispersant and then add it to a radically polymerizable compound to thus disperse it, or mix a radically polymerizable compound with a dispersant and then add the pigment thereto to thus disperse it. For dispersion, for example, dispersing equipment such as a ball mill, a bead mill, a sand mill, a salt mill, an attritor, a roll mill, an agitator, a Henschel mixer, a colloidal mill, an ultrasonic homogenizer, a pearl mill, a wet type jet mill, or a paint shaker may be used. Among them, bead mill dispersing equipment is preferable since its dispersing properties are excellent.

When carrying out dispersion by means of a bead mill, the use of beads preferably having an average diameter of 0.01 to 3.0 mm, more preferably 0.05 to 1.5 mm, and yet more preferably 0.1 to 1.0 mm enables a pigment dispersion having excellent stability to be obtained.

(D) Other component

The ink composition of the present invention may comprise a component other than components (A) to (C) above as necessary.

As the other component, a known additive may be used, and examples thereof include an amine compound, a cationically polymerizable compound, a cationic polymerization initiator, a UV absorber, an antioxidant, an antifading agent, a conductive salt, a solvent, a polymer compound, a surfactant, a levelling additive, a matting agent, a wax, a tackifier, and a sensitizer.

<Amine compound>

For the purpose of improving storage stability or radical generation efficiency of a radical initiator, the ink composition of the present invention preferably comprises an amine compound.

The amine compound that can be used in the present invention is not particularly limited, and a conventionally known amine compound may be used without any particular restrictions.

Furthermore, the amine compound may be a compound having one amine moiety in the molecule or a compound having two or more amine moieties in the molecule, and may have a substituent such as an alkyl group, an alkenyl group, an alkynyl group, a halogen atom (-F, -Br, -Cl, -I), a hydroxy group, an alkoxy group, an aryloxy group, an alkylthio group, an arylthio group, an acyl group, an acyloxy group, an alkoxycarbonyl group, or an aryloxycarbonyl group.

From the viewpoint of safety, the amine compound that can be used in the present invention preferably has a boiling point at standard atmospheric pressure of at least 120°C, more preferably at least 150°C, and yet more preferably at least 180°C.

The molecular weight of the amine compound is preferably in the range of 100 to 1,000, more preferably in the range of 150 to 800, and yet more preferably in the range of 200 to 600.

Specific examples of the amine compound include compounds described in M.

R. Sander et al., 'Journal of Polymer Society' Vol. 10, p. 3173 (1972), JP-B-44-20189, JP-A-51-82102, JP-A-52-134692, JP-A-59-138205, JP-A-60-84305, JP-A-62-18537, JP-A-64-33104, and Research Disclosure 33825, and specific examples thereof include triethanolamine, ethyl p-dimethylaminobenzoate, p-formyldimethylaniline, and p-methylthiodimethylaniline.

The amount thereof added may be selected appropriately according to the structure of the amine compound used or the intended application, but relative to the total weight of the ink composition is preferably 0 to 15 wt %, and more preferably 0 to 10wt%.

<UV absorber>

A UV absorber may be used from the viewpoint of improving the weather resistance of an image obtained and preventing discoloration.

The UV absorbers include benzotriazole compounds described in JP-A-58-185677, JP-A-61-190537, JP-A-2-782, JP-A-5-197075 and JP-A-9-34057; benzophenone compounds described in JP-A-46-2784, JP-A-5-194483 and US Pat. No. 3,214,463; cinnamic acid compounds described in JP-B-48-30492, JP-B-56-21141 and JP-A-10-88106;

triazine compounds described in JP-A-4-298503, JP-A-8-53427, JP-A-8-239368, JP-A-10-182621 and JP-W-8-501291 (the term "JP-W" as used herein means an unexamined published international patent application); compounds described in Research Disclosure No. 24239; and compounds represented by stilbene and benzoxazole compounds, which absorb ultraviolet rays to emit fluorescence, the so-called fluorescent brightening agents.

The amount thereof added is appropriately selected according to the intended application, and it is generally 0 to 5 wt % on the basis of the total weight of the ink composition.

<Antioxidant>

In order to improve the stability of the ink composition, an antioxidant may be added thereto. Examples of the antioxidant include those described in Laid-open European Patent Nos. 223739, 309401, 309402, 310551, 310552, and 459416, Laid-open German Patent No. 3435443, JP-A-54-48535, JP-A-62-262047, JP-A-63-113536, JP-A-63-163351, JP-A-2-262654, JP-A-2-71262, JP-A-3-121449, JP-A-5-61166, JP-A-5-119449, and US Pat. Nos. 4,814,262 and 4,980,275.

The amount thereof added is appropriately selected according to the intended application, and it is preferably 0 to 5 wt % on the basis of the total weight of the ink composition.

<Antifading agent>

The ink composition of the present invention may employ various organic and metal complex antifading agents.

The organic antifading agents include hydroquinones, alkoxyphenols, dialkoxyphenols, phenols, anilines, amines, indanes, chromans, alkoxyanilines, and heterocycles

The metal complex antifading agents include nickel complexes and zinc complexes. More specifically, there can be used compounds described in patents cited in Research Disclosure, No. 17643, Items VII-I to J, ibid., No.15162, ibid., No.18716, page 650, left-hand column, ibid., No. 36544, page 527, ibid., No. 307105, page 872, and ibid., No. 15162, and compounds contained in formulae and compound examples of typical compounds described in JP-A-62-21572, pages 127 to 137.

The amount thereof added is appropriately selected according to the intended application, and it is preferably 0 to 5 wt % on the basis of the total amount of the ink composition.

<Conductive salt>

The ink composition of the present invention may contain, for the purpose of controlling discharge properties, a conductive salt such as potassium thiocyanate, lithium nitrate, ammonium thiocyanate, or dimethylamine hydrochloride.

<Solvent>

It is also effective to add a trace amount of organic solvent to the ink composition of the present invention in order to improve the adhesion to a recording medium.

Examples of the solvent include ketone-based solvents such as acetone, methyl ethyl ketone, and diethyl ketone, alcohol-based solvents such as methanol, ethanol, 2-propanol, 1-propanol, 1-butanol, and tert-butanol, chlorine-based solvents such as chloroform and methylene chloride, aromatic-based solvents such as benzene and toluene, ester-based solvents such as ethyl acetate, butyl acetate, and isopropyl acetate, ether-based solvents such as diethyl ether, tetrahydrofuran, and dioxane, and glycol ether-based solvents such as ethylene glycol monomethyl ether and ethylene glycol dimethyl ether.

In this case, it is effective if the amount thereof added is in a range that does not cause problems with the solvent resistance or the VOC, and the amount is preferably 5 wt % or less relative to the total amount of the ink composition, and more preferably 3 wt % or less. Yet more preferably there is no use of the solvent.

<High molecular weight compound>

The ink composition may contain various types of high molecular weight compounds in order to adjust film physical properties.

Examples of the high molecular weight compounds include acrylic polymers, polyvinylbutyral resins, polyurethane resins, polyamide resins, polyester resins, epoxy resins, phenol resins, polycarbonate resins, polyvinylformal resins, shellac, vinylic resins, acrylic resins, rubber-based resins, waxes, and other natural resins.

They may be used singly or in a combination of two or more types. Among these, a vinylic copolymer obtained by copolymerization of an acrylic monomer is preferable.

Furthermore, as a copolymer component--of- the- high molecular weight compound, a copolymer containing as a structural unit a 'carboxyl group-containing monomer', an 'alkyl methacrylate ester', or an 'alkyl acrylate ester' may preferably be used.

<Surfactant>

The ink composition of the present invention may contain a surfactant.

As the surfactant, those described in JP-A-62-173463 and JP-A-62-183457 can be cited. Examples thereof include anionic surfactants such as dialkylsulfosuccinic acid salts, alkylnaphthalene sulfonic acid salts, and fatty acid salts; nonionic surfactants such as polyoxyethylene alkyl ethers, polyoxyethylene alkyl aryl ethers, acetylene glycols, polyoxyethylene/polyoxypropylene block copolymers, and silicone oil; and cationic surfactants such as alkylamine salts and quaternary ammonium salts. An organofluoro compound may be used instead of the above-mentioned surfactant. The organofluoro compound is preferably hydrophobic. Examples of the organofluoro compound include fluorine-based surfactants, oil-like fluorine-based compounds (e.g. fluorine oil), solid fluorine compound resins (e.g. tetrafluoroethylene resin), and those described in JP-B-57-9053 (paragraphs 8 to 17) and JP-A-62-135826.

The content of the surfactant in the ink composition is appropriately adjusted to match the surface tension suitable for the inkjet discharge properties, and is preferably 0 to 6 wt %, more preferably 0 to 4 wt %, yet more preferably 0 to 2 wt %.

In addition to the above, the composition may contain as necessary, for example, a leveling additive, a matting agent, a wax for adjusting film physical properties, or a tackifier in order to improve the adhesion to a recording medium such as polyolefin or PET, the tackifier not inhibiting polymerization.

Specific examples of the tackifier include high molecular weight tacky polymers described on pp. 5 and 6 of JP-A-2001-49200 (e.g. a copolymer formed from an ester of (meth)acrylic acid and an alcohol having an alkyl group with 1 to 20 carbons, an ester of (meth)acrylic acid and an alicyclic alcohol having 3 to 14 carbons, or an ester of (meth) acrylic acid and an aromatic alcohol having 6 to 14 carbons), and a low molecular weight tackifying resin having a polymerizable unsaturated bond.

<Sensitizer>

The ink composition may comprise as necessary a sensitizer for the purpose of improving radical generation efficiency of a radical polymerization initiator and lengthening the photosensitive wavelength.

Any sensitizer may be used without particular restriction as long as it absorbs actinic radiation and sensitizes a radical polymerization initiator by an electron transfer mechanism or an energy transfer mechanism, but it is preferable to use a compound having an absorption maximum at 300 to 400 nm in order to prevent unwanted discoloration of the ink composition.

Preferred examples of the sensitizer include polynuclear aromatic compounds such as anthracene, a 9,10-dialkoxyanthracene, pyrene, perylene, and triphenylene, thioxanthone compounds such as isopropylthioxanthone, xanthene compounds such as fluorescein, eosin, erythrosine, rhodamine B, and Rose Bengal, cyanine compounds such as thiacarbocyanine and oxacarbocyanine, merocyanine compounds such as merocyanine and carbomerocyanine, thiazine compounds such as thionine, methylene blue, and toluidine blue, acridine compounds such as acridine orange, chloroflavine, and acriflavine, anthraquinone compounds, squarium compounds, coumarin compounds such as 7-diethylamino-4-methylcoumarin, and heterocyclic compounds such as phenolthiazine and an *N*-aryloxazolidinone, and among them polynuclear aromatic compounds and thioxanthone compounds are preferable.

The content of the sensitizer in the ink composition of the present invention is appropriately selected according to the intended purpose, and is preferably 0 to 10 wt % relative to the weight of the entire ink composition.

- Properties of ink -

In the present invention, the ink composition has a viscosity at 25°C of preferably not more than 40 mPa·s, more preferably 5 to 40 mPa·s, and yet more preferably 7 to 30 mpa·s. Furthermore, the viscosity of the ink composition at the discharge temperature (preferably 25°C to 80°C, and more preferably 25°C to 50°C) is preferably 3 to 20 mpa·s, and more preferably 3 to 15 mPa·s. With regard to the ink composition of the present invention, it is preferable that its component ratio is appropriately adjusted so that the viscosity is in the above-mentioned range. When the viscosity at room temperature is set to be high, even when a porous recording medium is used, penetration of the ink composition into the recording medium can be prevented, and uncured monomer can be reduced. Furthermore, ink spreading when ink composition droplets have landed can be suppressed, and as a result there is the advantage that the image quality is improved.

The surface tension of the ink composition of the present invention at 25°C is preferably 20 to 50 mN/m, and

more preferably 23 to 40 mN/m. When recording is carried out on various types of recording medium such as polyolefin, PET, coated paper, and uncoated paper, from the viewpoint of spread and penetration, it is preferably at least 20 mN/m, and from the viewpoint of wettability it is preferably not more than 50 mN/m.

(2) Inkjet recording method, inkjet recording device, and printed material

The inkjet recording method of the present invention is a method for forming an image by discharging the ink composition of the present invention onto a recording medium (e.g. support, recording material) for inkjet recording and curing the ink by irradiating the ink composition so discharged onto the recording medium with actinic radiation.
More specifically, the inkjet recording method of the present invention comprises ($a^1$) a step of discharging the ink composition of the present invention onto a recording medium and ($b^1$) a step of curing the ink composition by irradiating the ink composition so discharged with actinic radiation.
The inkjet recording method of the present invention comprises the above steps, and thus forms an image from the ink composition cured on the recording medium.
The printed material of the present invention is a printed material recorded by the inkjet recording method of the present invention.
The inkjet recording method of the present invention may employ an inkjet recording device that will be described in detail below.

- Inkjet recording device -

An inkjet recording device used in the inkjet recording method of the present invention is not particularly limited, and any known inkjet recording device that can achieve an intended resolution may be used. That is, any known inkjet recording device, such as a commercial product, may be used in order to discharge an ink composition onto a recording medium in step ($a^1$) of the inkjet recording method of the present invention.
The inkjet recording device that can be used in the present invention is equipped with, for example, an ink supply system, a temperature sensor, and an actinic radiation source.
The ink supply system comprises, for example, a main tank containing the ink composition of the present invention, a supply pipe, an ink supply tank immediately before an inkjet head, a filter, and a piezo system inkjet head. The piezo system inkjet head may be driven so as to discharge a multisize dot of preferably 1 to 100 pL, and more preferably 8 to 30 pL, at a resolution of preferably 320 x 320 to 4,000 x 4,000 dpi, more preferably 400 x 400 to 1,600 x 1,600 dpi, and yet more preferably 720 x 720 dpi. Here, dpi referred to in the present invention means the number of dots per 2.54 cm.
As described above, since it is desirable for the radiation curing type ink composition to be discharged at a constant temperature, the inkjet recording device is preferably equipped with a temperature stabilizer for stabilizing the temperature of the ink composition. Parts to be controlled to a constant temperature include all of the supply pipe system and the members from the ink tank (including an intermediate tank if it is provided) to the discharging face of the nozzle. A section from the ink supply tank to the inkjet head is thermally insulated and heated.
A method of controlling temperature is not particularly limited, but it is preferable to provide, for example, temperature sensors at a plurality of pipe section positions, and control heating according to the ink composition flow rate and the temperature of the surroundings. The temperature sensors may be provided on the ink supply tank and in the vicinity of the inkjet head nozzle. Furthermore, the head unit that is to be heated is preferably thermally shielded or insulated-so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.
The ink composition is preferably discharged using the above mentioned inkjet recording device after being heated to preferably 25°C to 80°C, and more preferably 25°C to 50°C, so as to reduce the viscosity of the ink composition to preferably 3 to 20 mPa·s, and more preferably 3 to 15 mPa·s. In particular, it is preferable to use the ink composition having an ink viscosity at 25°C of not more than 50 mPa·s since a good discharge stability can be obtained. By employing this method, high discharge stability can be realized.
The actinic radiation curing type ink composition for inkjet recording such as the ink composition of the present invention generally has a viscosity that is higher than that of a normal ink composition or a water-based ink composition used for an inkjet recording ink, and variation in viscosity due to a change in temperature at the time of discharge is large. Viscosity variation in the ink composition has a large effect on changes in liquid droplet size and changes in liquid droplet discharge speed and, consequently, causes the image quality to be degraded. It is therefore necessary to maintain the ink composition discharge temperature as constant as possible. In the present invention, the control range for the temperature of the ink composition is preferably ±5°C of a set temperature, more preferably ±2°C of the set temperature, and yet more preferably ±1°C of the set temperature.

The step (b1) of curing the discharged ink composition by irradiating the ink composition with actinic radiation is now explained.

The ink composition discharged onto the recording medium cures upon exposure to actinic radiation. This is due to an initiating species such as a radical being generated by decomposition of the radical polymerization initiator contained in the ink composition of the present invention by irradiation with radiation, the radical functioning so as to make a polymerization reaction of a radically polymerizable compound take place and to promote it. In this process, if a sensitizer is present together with the radical polymerization initiator in the ink composition, the sensitizer in the system absorbs radiation, becomes excited, and promotes decomposition of the radical polymerization initiator by contact with the radical polymerization initiator, thus enabling a curing reaction with higher sensitivity to be achieved.

The actinic radiation used in this process may include $\alpha$ rays, $\gamma$ rays, an electron beam, X rays, UV rays, visible light, and IR rays. Although it depends on the absorption characteristics of the sensitizer, the peak wavelength of the actinic radiation is, for example, 150 to 500 nm, preferably 200 to 450 nm, and more preferably 250 to 400 nm.

Furthermore, the polymerization initiation system of the ink composition of the present invention has sufficient sensitivity for low output actinic radiation. The actinic radiation is applied therefore so that the illumination intensity on the exposed surface is, for example, 10 to 4,000 $mW/cm^2$, and preferably 20 to 2,500 $mW/cm^2$.

As an actinic radiation source, a mercury lamp, a gas/solid laser, etc. are mainly used, and for UV photocuring type ink composition for inkjet recording a mercury lamp and a metal halide lamp are widely known. However, from the viewpoint of protection of the environment, there has recently been a strong desire for mercury not to be used, and replacement by a GaN semiconductor UV light emitting device is very useful from industrial and environmental viewpoints. Furthermore, LEDs (UV-LED) and LDs (UV-LD) have small dimensions, long life, high efficiency, and low cost, and their use as a photocuring inkjet light source can be expected.

Furthermore, light-emitting diodes (LED) and laser diodes (LD) may be used as the source of actinic radiation. In particular, when a UV ray source is needed, a UV-LED or a UV-LD may be used. For example, Nichia Corporation has marketed a violet LED having a wavelength of the main emission spectrum of between 365 nm and 420 nm. Furthermore, when a shorter wavelength is needed, US Pat. No. 6,084,250 discloses an LED that can emit actinic radiation whose wavelength is centered between 300 nm and 370 nm. Furthermore, another UV-LED is available, and irradiation can be carried out with radiation of a different UV bandwidth. The actinic radiation source particularly preferable in the present invention is a UV-LED, and a UV-LED having a peak wavelength at 350 to 420 nm is particularly preferable.

The maximum illumination intensity of the LED on a recording medium is preferably 10 to 2,000 $mW/cm^2$, more preferably 20 to 1,000 $mW/cm^2$, and particularly preferably 50 to 800 $mW/cm^2$.

The ink composition of the present invention is desirably exposed to such actinic radiation for, for example, 0.01 to 120 sec., and preferably 0.1 to 90 sec.

Irradiation conditions and a basic method for irradiation with actinic radiation are disclosed in JP-A-60-132767. Specifically, a light source is provided on either side of a head unit that includes an ink composition discharge device, and the head unit and the light source are made to scan by a so-called shuttle system. Irradiation with actinic radiation is carried out after a certain time (e.g. preferably 0.01 to 5 sec., more preferably 0.01 to 3 sec., yet more preferably 0.01 to 1 sec., and especially preferably 0.01 to 0.5 sec.) has elapsed from when the ink has landed. By controlling the time from ink composition landing to irradiation so as to be a minimum in this way, it becomes possible to prevent the ink that has landed on a recording medium from spreading before being cured. Furthermore, since the ink can be exposed before it reaches a deep area of a porous recording medium that the light source cannot reach, it is possible to prevent monomer from remaining unreacted.

Furthermore, curing may be completed using another light source that is not driven. WO99/54415 discloses, as an irradiation method, a method employing an optical fiber and a method in which a collimated light source is incident on a mirror surface provided on a head unit side face, and a recorded area is irradiated with UV light.

By employing the above-mentioned inkjet recording method, it is possible to keep the diameter of landed ink composition dots constant even for various recording media having different surface wettability, thus improving the image quality.

The ink composition of the present invention may employ a plurality of colors of ink compositions in combination as an ink set. For example, a cyan ink composition, a magenta ink composition, and a yellow ink composition may be used.

Furthermore, they may be used as an ink set together with black and white ink compositions, or together with light magenta, light cyan, etc. ink compositions. In order to obtain a color image, it is preferable to superimpose in order from low lightness colors. By superimposing in order from low lightness inks, it becomes easy for radiation to reach ink in a lower part, and good curing sensitivity, reduction of residual monomer, and improvement in adhesion can be expected. In terms of irradiation, although it is possible to discharge all the colors and expose them together, it is preferable in terms of promoting curing that exposure is carried out for each color.

In this way, the ink composition of the present invention cures with high sensitivity upon exposure to actinic radiation, thereby forming an image on the surface of a recording medium.

The inkjet recording method of the present invention may suitably employ the ink set comprising the ink composition of the present invention. The order in which colored ink compositions are discharged is not particularly limited, but it is preferable to apply to a recording medium from a colored ink composition having a low lightness; when yellow, cyan, magenta, and black ink compositions are used, they are preferably applied on top of the recording medium in the order yellow → cyan → magenta → black. Moreover, the present invention is not limited thereto, and an ink set comprising a total of seven colors, that is, light cyan, and light magenta ink compositions and cyan, magenta, black, white, and yellow dark ink compositions may preferably be used, and in this case they are applied on top of the recording medium in the order white → light cyan → light magenta → yellow → cyan → magenta → black.

In the present invention, the recording medium is not particularly limited, and a recording medium known as a support or a recording material may be used.

Examples thereof include paper, paper laminated with a plastic (e.g. polyethylene, polypropylene, polystyrene, etc.), a metal plate (e.g. aluminum, zinc, copper, etc.), a plastic film (e.g. cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinylacetal, etc.), and paper or plastic film laminated or vapor-deposited with the above metal. In- the present invention, as the recording medium, a non-absorbing recording medium may suitably be used.

EXAMPLES

The present invention is explained in further detail by reference to Examples and Comparative Examples. However, the present invention should not be construed as being limited to these Examples.

'Parts' described below means 'parts by weight' unless otherwise specified.

Materials of the ink compositions used in Examples and Comparative Examples were as follows.

IRGALITE BLUE GLVO (cyan pigment, manufactured by Ciba Japan)
CINQUASIA MAGENTA RT-335 D (magenta pigment, manufactured by Ciba Japan)
NOVOPERM YELLOW H2G (yellow pigment, manufactured by Clariant Japan)
SPECIAL BLACK 250 (black pigment, manufactured by Evonic Degussa Japan)
TIPAQUE CR-60-2 (white pigment, manufactured by Ishihara Sangyo Kaisha Ltd.)
SOLSPERSE 5000 (pigment dispersing agent, manufactured by The Lubrizol Corporation)
SOLSPERSE 32000 (pigment dispersing agent, manufactured by The Lubrizol Corporation)
SOLSPERSE 36000 (pigment dispersing agent, manufactured by The Lubrizol Corporation)
FA-511AS (manufactured by Hitachi Chemical Co., Ltd.)
FA-512AS (manufactured by Hitachi Chemical Co., Ltd.)
TCPD-A (manufactured by Hitachi Chemical Co., Ltd.)
TOE-A (manufactured by Hitachi Chemical Co., Ltd.)
SR285 (manufactured by Sartomer Japan Inc.)
CD611 (manufactured by Sartomer Japan Inc.)
KAYARAD TC-110S (manufactured by Nippon Kayaku Co., Ltd.)
SR506D (isobornyl acrylate, manufactured by Sartomer Japan Inc.)
NVC (*N*-vinylcaprolactam, manufactured by BASF Japan)
SR339A (2-phenoxyethyl acrylate, manufactured by Sartomer Japan Inc.)
SR9003 (propoxylated (2) neopentyl glycol diacrylate (compound formed by diacrylating neopentyl glycol propylene oxide 2 mol adduct), manufactured by Sartomer Japan Inc.)
SR238F (1,6-hexanediol diacrylate, manufactured by Sartomer Japan Inc.)
SR508 (dipropylene glycol diacrylate, manufactured by Sartomer Japan Inc.)
SR351S (trimethylolpropane triacrylate, manufactured by Sartomer Japan Inc.)
KAYARAD DPCA-60 (caprolactone-modified dipentaerythritol hexaacrylate, manufactured by Nippon Kayaku Co., Ltd.)
CN9007 (urethane acrylate oligomer, average number of functional groups 2, manufactured by Sartomer Japan Inc.)
CN964 (urethane acrylate oligomer, average number of functional groups 2, manufactured by Sartomer Japan Inc.)
Lucirin TPO (photoinitiator, manufactured by BASF Japan)
IRGACURE 184 (photoinitiator, manufactured by Ciba Japan)
IRGACURE 819 (photoinitiator, manufactured by Ciba Japan)
IRGACURE 369 (photoinitiator, manufactured by Ciba Japan)
DAROCUR EBD (ethyl 4-dimethylaminobenzoate, manufactured by Ciba Japan)
FIRSTCURE ITX (isopropylthioxanthone, manufactured by ChemFirst Inc.)
FIRSTCURE ST-1 (polymerization inhibitor, manufactured by ChemFirst Inc.)
TINUVIN 770 DF (hindered amine-based light stabilizer, manufactured by Ciba Japan)
BYK-307 (silicone-based surfactant, manufactured by BYK-Chemie Japan)

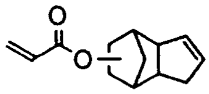
FA-511AS

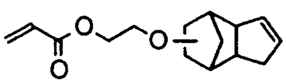
FA-512AS

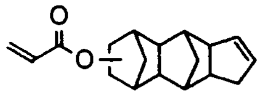
TCPD-A

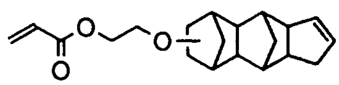
TOE-A

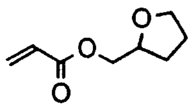
SR285

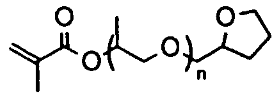
CD611(main component n=2)

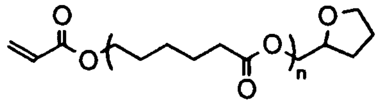
KAYARAD TC-110S(main component n=1)

(Preparation of mill base)

Each of cyan, yellow, magenta, black, and white mill bases was mixed using the formulations below, and stirred in a mixer (L4R; Silverson) at 2,500 rpm for 10 min. Subsequently, the mixture was placed in a DISPERMAT LS bead mill disperser (VMA) and dispersed using YTZ balls having a diameter of 0.65 mm (Nikkato Corporation) at 2,500 rpm for 6 hours.

| | |
|---|---|
| <Cyan mill base> | |
| IRGALITRE BLUE GLVO | 30 parts |
| SR9003 | 59 parts |
| SOLSPERSE 32000 | 10 parts |
| FIRSTCURE ST-1 | 1 part |
| <Yellow mill base> | |
| NOVOPERM YELLOW H2G | 30 parts |
| SR9003 | 53 parts |
| SOLSPERSE 32000 | 16 parts |
| FIRSTCURE ST-1 | 1 part |
| <Magenta mill base> | |
| CINQUASIA MAGENTA RT-335 D | 30 parts |
| SR9003 | 59 parts |
| SOLSPERSE 32000 | 10 parts |
| FIRSTCURE ST-1 | 1 part |
| <Black mill base> | |
| SPECIAL BLACK 250 | 40 parts |
| SR9003 | 42 parts |
| SOLSPERSE 32000 | 15 parts |
| SOLSPERSE 5000 | 2 parts |
| FIRSTCURE ST-1 | 1 part |
| <White mill base> | |
| TIPAQUE CR-60-2 | 70 parts |
| SR339A | 25 parts |
| SOLSPERSE 36000 | 5 parts |

(Example 1)

The components below were stirred in a mixer (L4R, Silverson) at 2,500 rpm for 15 min, thus giving cyan radiation curing type ink composition 1.

The viscosity measured using a TVE-22LT (Toki Sangyo Co., Ltd.) at 45°C was 14.0 mPa·s, and the surface tension measured using a CBVP-Z surface tensiometer (Kyowa Interface Science Co., Ltd.) at 25°C was 36.0 mN/m.

| | |
|---|---|
| Cyan mill base | 7.0 parts |
| FA-512AS (compound represented by Formula (Ia)) | 35.0 parts |
| SR285 (compound represented by Formula (II)) | 25.0 parts |
| SR506D (radically polymerizable compound) | 20.0 parts |
| SR351S (radically polymerizable compound) | 1.0 part |
| CN9007 (radically polymerizable compound) | 3.0 parts |
| FIRSTCURE ST-1 | 0.1 parts |
| IRGACURE 819 | 2.0 parts |
| IRGACURE 369 | 1.5 parts |
| Lucirin TPO | 3.9 parts |
| FIRSTCURE ITX | 1.5 parts |

(Evaluation of ink composition)

<Storage stability>

A glass vial bottle was charged with ink composition 1, and increase in viscosity after storing at 60°C for 4 weeks was evaluated. The smaller the increase, the better the storage stability, and when it was no greater than 20% there were generally no problems in practice. The results are given in Table 2.

$$\text{Increase (\%)} = (\text{viscosity after storage} - \text{viscosity before storage})/\text{viscosity before storage} \times 100$$

<Cure rate>

The surface of polyvinyl chloride (thickness 220 μm) as a recording medium was coated with ink composition 1 using a K hand coater (bar No. 2) so as to give a wet film thickness of 12 μm. Subsequently, it was radiation-cured by passing it repeatedly through a CSOT UV conveyor (G S Yuasa Power Supply Ltd.) equipped with a MAN250L ozone-free metal halide lamp and set at a conveyor speed of 9.0 m/min and an exposure intensity of 2.0 W/cm$^2$ until tackiness of the coated surface disappeared. The cure rate was evaluated using the criteria below. The results are given in Table 2.
Excellent: became tack-free with 1 pass. The cure rate was very high.
Good: became tack-free with 2 passes. The cure rate was high.
Fair: became tack-free with 3 passes. The cure rate was rather low.
Poor: became tack-free with 4 or more passes or did not cure. The cure rate was low.

<Adhesion to recording medium>

The surface of polyvinyl chloride (thickness 220 μm) as a recording medium was coated with ink composition 1 using a K hand coater (bar No. 2) so as to give a wet film thickness of 12 μm. Subsequently, it was radiation-cured by passing it 12 times repeatedly through a CSOT UV conveyor (G S Yuasa Power Supply Ltd.) equipped with a MAN250L ozone-free metal halide lamp and set at a conveyor speed of 9.0 m/min and an exposure intensity of 2.0 W/cm$^2$. Adhesion to the recording medium was evaluated using this cured film in accordance with ISO 2409 (cross-cut method) using the criteria below. If adhesion was at level 0, 1, or 2, there was no problem in practice. The results are given in Table 2.

0: the cut edge was completely smooth, and there was no peeling anywhere in any lattice cell.
1: slight peeling of coated film at the intersection point of cuts. The cross-cut portion affected did not exceed 5%.
2: peeled along the edge of a cut and/or the intersection point of cuts in the coated film. The cross-cut portion affected was greater than 5% but did not exceed 15%.
3: large amount of peeling along the edge of cuts of the coated film in parts or in the whole area and/or various parts of the lattice cell were partially or completely peeled. The cross-cut portion affected was greater than 15% but did not exceed 35%.
4: large amount of peeling along the edge of cuts of the coated film in parts or in the whole area and/or lattice cells

of several areas were partially or completely peeled. The cross-cut portion affected was greater than 35% but did not exceed 65%.
5: the degree of peeling was beyond that in 4.

<Flexibility>

The surface of polyvinyl chloride (thickness 220 μm) as a recording medium was coated with ink composition 1 using a K hand coater (bar No. 2) so as to give a wet film thickness of 12 μm. Subsequently, it was radiation-cured by passing it 12 times repeatedly through a CSOT UV conveyor (G S Yuasa Power Supply Ltd.) equipped with a MAN250L ozone-free metal halide lamp and set at a conveyor speed of 9.0 m/min and an exposure intensity of 2.0 W/cm$^2$. Flexibility was evaluated by bending this cured film five times to and fro at the same location, and the degree of cracking occurring in the coated film was then evaluated using the criteria below. The results are given in Table 2.
Excellent: no cracking at all. Flexibility was very high.
Good: slight cracking. Flexibility was high.
Fair: rather large cracks. Flexibility was rather low.
Poor: completely cracked. Flexibility was low.

<Scratch resistance>

The surface of polyvinyl chloride (thickness 220 μm) as a recording medium was coated with ink composition 1 using a K hand coater (bar No. 2) so as to give a wet film thickness of 12 pm. Subsequently, it was radiation-cured by passing it 12 times repeatedly through a CSOT UV conveyor (G S Yuasa Power Supply Ltd.) equipped with a MAN250L ozone-free metal halide lamp and set at a conveyor speed of 9.0 m/min and an exposure intensity of 2.0 W/cm$^2$. Scratch resistance was evaluated using this cured film in accordance with ISO 15184 (pencil scratch test) using the criteria below. The results are given in Table 2.
Excellent: 4H or higher, scratch resistance was very good.
Good: at least F but no greater than 3H, scratch resistance was good.
Fair: at least 3B but no greater than HB, scratch resistance was rather poor.
Poor: no greater than 4B, scratch resistance was poor.

<Inkjet discharge properties>

Evaluation was made using the criteria below by continuously discharging ink composition 1 at 45°C for 60 min from a JetLyzer (Mimaki Engineering Co., Ltd.) equipped with a CA3 inkjet print head (Toshiba Tec Corporation) and set at a discharge voltage of 22 V and a discharge drop number of 7 drops. The results are given in Table 2.
Excellent: droplet firing was carried out normally. Inkjet discharge properties were very good.
Good: a slight degree of mist generation was observed. Inkjet discharge properties were good.
Fair: mist generation was observed. Inkjet discharge properties were rather poor. Poor: no discharge at all. Inkjet discharge properties were poor.

<Image quality (contact angle)>

The surface of polyvinyl chloride (thickness 220 μm) as a recording medium was coated with ink composition 1 using a K hand coater (bar No. 2) so as to give a wet film thickness of 12 μm. Subsequently, it was radiation-cured by passing it 12 times repeatedly through a CSOT UV conveyor (G S Yuasa Power Supply Ltd.) equipped with a MAN250L ozone-free metal halide lamp and set at a conveyor speed of 9.0 m/min and an exposure intensity of 2.0 W/cm$^2$. 2 μL of ink composition 1 was dropped on this cured film, and the contact angle after 1.2 sec was measured using a DropMaster DM700 mechanical surface analyzer (Kyowa Interface Science Co., Ltd.). The larger the contact angle, the more uneven the image and the poorer the image quality. The results are given in Table 2.

<Image quality (visual)>

An ink cartridge charged with ink composition 1 was loaded in a LuxelJet UV250GT UV inkjet printer (Fujifilm), and a 100% solid image was drawn in quality mode. The gloss feel of the image was evaluated visually using the criteria below. The results are given in Table 2.
Excellent: the image was very smooth and had a high gloss feel. Image quality was very good.
Good: the image was smooth and had a gloss feel. Image quality was good.
Fair: the image was rough and had almost no gloss feel. Image quality was rather poor.

Poor: the image was rough and had no gloss feel. Image quality was poor.

(Examples 2 to 14 and Comparative Examples 1 to 3)

Ink compositions 2 to 14 and comparative ink compositions 1 to 3 were prepared in the same manner as for ink composition 1 except that the amounts of radically polymerizable compounds apart from SR351S and CN9007 of ink composition 1 were changed as described in Table 1, and evaluation was carried out as in Example 1. The results are given in Table 2.

(Table 1)

| | Added Amount (part) | | | |
|---|---|---|---|---|
| | FA-512AS | SR285 | SR506D | NVC |
| Ex. 1 | 35 | 25 | 20 | 0 |
| Ex. 2 | 15 | 25 | 40 | 0 |
| Ex. 3 | 20 | 25 | 35 | 0 |
| Ex. 4 | 25 | 25 | 30 | 0 |
| Ex. 5 | 45 | 25 | 10 | 0 |
| Ex. 6 | 50 | 25 | 5 | 0 |
| Ex. 7 | 55 | 25 | 0 | 0 |
| Ex. 8 | 35 | 5 | 40 | 0 |
| Ex. 9 | 35 | 10 | 35 | 0 |
| Ex. 10 | 35 | 15 | 30 | 0 |
| Ex. 11 | 35 | 35 | 10 | 0 |
| Ex. 12 | 35 | 40 | 5 | 0 |
| Ex. 13 | 35 | 45 | 0 | 0 |
| Ex. 14 | 45 | 35 | 0 | 0 |
| Comp. Ex. 1 | 35 | 0 | 45 | 0 |
| Comp. Ex. 2 | 0 | 25 | 55 | 0 |
| Comp. Ex. 3 | 35 | 0 | 25 | 20 |

(Table 2)

| | Storage Stability (%) | Cure Rate | Adhesion to Recording Medium | Flexibility | Scratch Resistance | Inkjet Discharge Properties | Image Quality | |
|---|---|---|---|---|---|---|---|---|
| | | | | | | | Contact Angle (degree) | Visual |
| Ex. 1 | 10 | Excellent | 0 | Excellent | Excellent | Excellent | 17 | Excellent |
| Ex. 2 | 6 | Fair | 0 | Good | Fair | Excellent | 15 | Excellent |
| Ex. 3 | 7 | Good | 0 | Excellent | Good | Excellent | 16 | Excellent |
| Ex. 4 | 9 | Excellent | 0 | Excellent | Excellent | Excellent | 16 | Excellent |
| Ex. 5 | 12 | Excellent | 0 | Excellent | Excellent | Excellent | 18 | Excellent |
| Ex. 6 | 14 | Excellent | 0 | Good | Excellent | Good | 22 | Good |
| Ex. 7 | 18 | Excellent | 0 | Fair | Excellent | Good | 24 | Good |
| Ex. 8 | 11 | Excellent | 2 | Fair | Excellent | Good | 18 | Excellent |

(continued)

| | Storage Stability (%) | Cure Rate | Adhesion to Recording Medium | Flexibility | Scratch Resistance | Inkjet Discharge Properties | Image Quality | |
|---|---|---|---|---|---|---|---|---|
| | | | | | | | Contact Angle (degree) | Visual |
| Ex. 9 | 10 | Excellent | 1 | Good | Excellent | Good | 18 | Excellent |
| Ex. 10 | 10 | Excellent | 0 | Excellent | Excellent | Excellent | 17 | Excellent |
| Ex. 11 | 9 | Excellent | 0 | Excellent | Excellent | Excellent | 17 | Excellent |
| Ex. 12 | 9 | Good | 0 | Excellent | good | Excellent | 17 | Excellent |
| Ex. 13 | 6 | Fair | 0 | Excellent | Fair | Excellent | 16 | Excellent |
| Ex. 14 | 10 | Excellent | 0 | Excellent | Excellent | Excellent | 17 | Excellent |
| Comp. Ex. 1 | 16 | Excellent | 4 | Poor | Excellent | Good | 18 | Excellent |
| Comp. Ex. 2 | 10 | Poor | 1 | Good | Poor | Excellent | 15 | Excellent |
| Comp. Ex. 3 | 28 | Excellent | 0 | Good | Excellent | Fair | 35 | Poor |

(Examples 15 to 19)

Ink compositions 15 to 19 were prepared in the same manner as for ink composition 1 except that the compound represented by Formula (Ia) (FA-512AS) and the compound represented by Formula (II) (SR285) in ink composition 1 were changed to compounds described in Table 3, and evaluation was carried out as in Example 1. The results are given in Table 4.

(Table 3)

| | Compound represented by Formula (I) | Compound represented by Formula (II) |
|---|---|---|
| Ex. 15 | FA-511AS | SR285 |
| Ex. 16 | TCPD-A | SR285 |
| Ex. 17 | TOE-A | SR285 |
| Ex. 18 | FA-512AS | CD611 |
| Ex. 19 | FA-512AS | KAYARAD TC-110S |

(Table 4)

| | Storage Stability (%) | Cure Rate | Adhesion to Recording Medium | Flexibility | Scratch Resistance | Inkjet Discharge Properties | Image Quality | |
|---|---|---|---|---|---|---|---|---|
| | | | | | | | Contact Angle (degree) | Visual |
| Ex. 15 | 15 | Excellent | 0 | Good | Excellent | Excellent | 15 | Excellent |
| Ex. 16 | 7 | Excellent | 0 | Excellent | Excellent | Good | 17 | Excellent |
| Ex. 17 | 5 | Excellent | 0 | Excellent | Excellent | Good | 19 | Excellent |
| Ex. 18 | 9 | Excellent | 1 | Excellent | Excellent | Good | 19 | Excellent |
| Ex. 19 | 7 | Excellent | 2 | Excellent | Excellent | Good | 23 | Good |

(Example 20)

The components below were stirred in a mixer (L4R, Silverson) at 2,500 rpm for 15 min, thus giving yellow radiation curing type ink composition 20. The ink composition 20 was evaluated as in Example 1. The results are shown in Table 5.

| | |
|---|---|
| Yellow mill base | 8.0 parts |
| FA-512AS | 42.0 parts |
| SR285 | 31.0 parts |
| SR238F | 5.0 parts |
| KAYARAD DPCA-60 | 1.2 parts |
| FIRSTCURE ST-1 | 0.3 parts |
| Lucirin TPO | 9.0 parts |
| Benzophenone | 3.5 parts |

(Example 21)

The components below were stirred in a mixer (L4R, Silverson) at 2,500 rpm for 15 min, thus giving Magenta radiation curing type ink composition 21. The ink composition 21 was evaluated as in Example 1. The results are shown in Table 5.

| | |
|---|---|
| Magenta mill base | 16.0 parts |
| FA-512AS | 37.0 parts |
| SR285 | 25.0 parts |
| SR508 | 10.0 parts |
| CN9007 | 3.0 parts |
| FIRSTCURE ST-1 | 0.1 parts |
| IRGACURE 819 | 2.0 parts |
| IRGACURE 369 | 1.5 parts |
| Lucirin TPO | 3.9 parts |
| FIRSTCURE ITX | 1.5 parts |

(Example 22)

The components below were stirred in a mixer (L4R, Silverson) at 2,500 rpm for 15 min, thus giving Black radiation curing type ink composition 22. The ink composition 22 was evaluated as in Example 1. The results are shown in Table 5.

| | |
|---|---|
| Black mill base | 9.0 parts |
| FA-512AS | 35.0 parts |
| SR285 | 25.0 parts |
| SR506D | 18.0 parts |
| SR351S | 1.0 parts |
| CN9007 | 3.0 parts |
| FIRSTCURE ST-1 | 0.1 parts |
| IRGACURE 819 | 2.0 parts |
| IRGACURE 369 | 1.5 parts |
| Lucirin TPO | 3.8 parts |
| FIRSTCURE ITX | 1.5 parts |
| BYK-307 | 0.1 parts |

(Example 23)

The components below were stirred in a mixer (L4R, Silverson) at 2,500 rpm for 15 min, thus giving White radiation curing type ink composition 23. The ink composition 23 was evaluated as in Example 1. The results are shown in Table 5.

| | |
|---|---|
| White mill base | 25.0 parts |
| FA-511AS | 27.5 parts |
| CD611 | 21.5 parts |
| SR238F | 8.0 parts |
| KAYARAD DPCA-60 | 1.0 parts |
| CN964 | 1.0 parts |
| FIRSTCURE ST-1 | 0.3 parts |
| TINUVIN 770 DF | 0.1 parts |
| IRGACURE 184 | 3.0 parts |
| Lucirin TPO | 8.1 parts |
| Benzophenone | 3.0 parts |
| DAROCUR EBD | 1.5 parts |

(Table 5)

| | Storage Stability (%) | Cure Rate | Adhesion to Recording Medium | Flexibilit Flexibility | Scratch Resistance | Inkjet Discharge Properties | Image Quality | |
|---|---|---|---|---|---|---|---|---|
| | | | | | | | Contact Angle (degree) | Visual |
| Ex.20 | 15 | Excellent | 0 | Good | Excellent | Excellent | 18 | Excellent |
| Ex.21 | 7 | Good | 0 | Good | Fair | Excellent | 16 | Excellent |
| Ex.22 | 8 | Excellent | 0 | Excellent | Excellent | Excellent | 28 | Fair |
| Ex.23 | 14 | Excellent | 1 | Good | Excellent | Good | 24 | Good |

## Claims

**1.** An ink composition comprising:

(A) a radically polymerizable compound;
(B) a radical polymerization initiator; and
(C) a colorant;

the radically polymerizable compound (A) comprising at least one type of compound represented by Formula (Ia) and/or compound represented by Formula (Ib) and at least one type of compound represented by Formula (II)

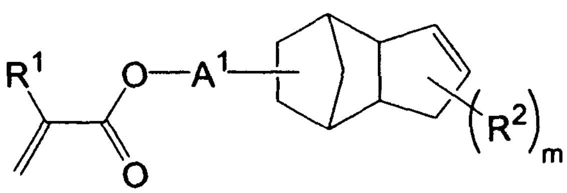

(Ia)

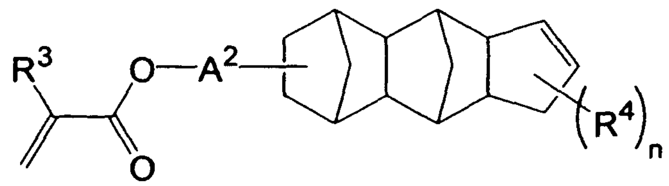

( Ib )

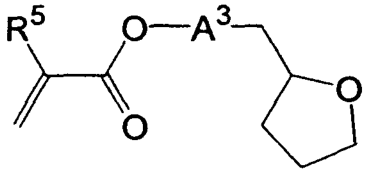

( II )

wherein $R^1$, $R^3$, and $R^5$ independently denote a hydrogen atom or a methyl group, $A^1$ to $A^3$ independently denote a single bond or a divalent linking group, $R^2$ and $R^4$ independently denote a monovalent substituent, m denotes an integer of 0 to 13, n denotes an integer of 0 to 19, when m is an integer of 2 to 13 the $R^2$s may be identical to or different from each other, and when n is an integer of 2 to 19 the $R^4$s may be identical to or different from each other.

**2.** The ink composition according to Claim 1, wherein the radically polymerizable compound (A) comprises only (meth) acrylic acid ester compounds.

**3.** The ink composition according to Claim 1 or 2, wherein the total content of the compound represented by Formula (Ia) and the compound represented by Formula (Ib) is 15 to 55 wt % in the ink composition.

**4.** The ink composition according to any one of Claims 1 to 3, wherein the content of the compound represented by Formula (II) is 5 to 45 wt % in the ink composition.

**5.** The ink composition according to any one of Claims 1 to 4, wherein it comprises as the radically polymerizable compound (A) at least one type of (meth)acrylic acid ester compound other than the compound represented by Formula (Ia), Formula (Ib), or Formula (II).

**6.** The ink composition according to Claim 5, wherein it comprises a (meth)acrylic acid ester compound other than the compound represented by Formula (Ia), Formula (Ib), or Formula (II) at 1 to 30 wt % in the ink composition.

**7.** The ink composition according to Claim 5 or 6, wherein the radically polymerizable compound (A) comprises a polyfunctional (meth)acrylic acid ester compound.

**8.** The ink composition according to Claim 5 or 6, wherein the radically polymerizable compound (A) comprises a 3- to 6-functional (meth)acrylic acid ester compound.

**9.** The ink composition according to Claim 7, wherein the content of the polyfunctional (meth)acrylic acid ester compound is in the range of 1 to 25 wt % of the total weight of the ink composition.

**10.** The ink composition according to any one of Claims 1 to 9, wherein the radically polymerizable compound (A) comprises a compound represented by Formula (Ib).

**11.** The ink composition according to any one of Claims 1 to 10, wherein the content of the radical polymerization initiator (B) is 1 to 25 wt % relative to the total weight of the ink composition.

**12.** The ink composition according to any one of Claims 1 to 11, wherein the colorant (C) is a pigment, and the ink composition comprises a pigment dispersing agent.

**13.** The ink composition according to any one of Claims 1 to 12, wherein the content of the colorant (C) is 0.1 to 30 wt % relative to the total weight of the ink composition.

**14.** An inkjet recording method comprising:

($a^1$) a step of discharging the ink composition according to any one of Claims 1 to 13 onto a recording medium; and
($b^1$) a step of curing the ink composition by irradiating the discharged ink composition with actinic radiation.

**Patentansprüche**

**1.** Tintenzusammensetzung, umfassend:

(A) eine radikalisch polymerisierbare Verbindung;
(B) einen Radikalpolymerisationsinitiator; und
(C) ein Farbmittel;

wobei die radikalisch polymerisierbare Verbindung (A) wenigstens eine Art von Verbindung, die durch Formel (Ia) wiedergegeben ist, und/oder Verbindung, die durch Formel (Ib) wiedergegeben ist, und wenigstens eine Art von Verbindung, die durch Formel (II) wiedergegeben ist, umfasst,

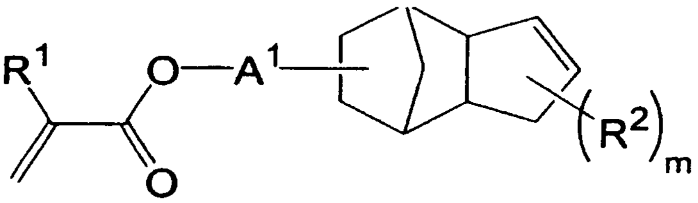
( Ia )

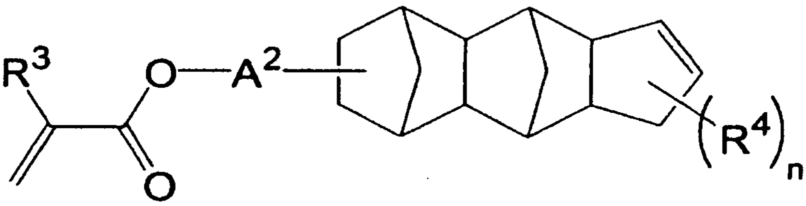
( Ib )

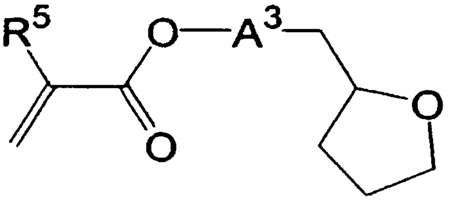
( II )

worin $R^1$, $R^3$ und $R^5$ unabhängig voneinander ein Wasserstoffatom oder eine Methylgruppe bedeuten, $A^1$ bis $A^3$ unabhängig voneinander eine Einfachbindung oder eine zweiwertige Verbindungsgruppe bedeuten, $R^2$ und $R^4$ unabhängig voneinander einen einwertigen Substituenten bedeuten, m eine ganze Zahl von 0 bis 13 bedeutet, n eine ganze Zahl von 0 bis 19 bedeutet, wenn m eine ganze Zahl von 2 bis 13 ist, die Reste $R^2$ identisch oder voneinander verschieden sein können, und wenn n eine ganze Zahl von 2 bis 19 ist, die Reste $R^4$ identisch oder voneinander verschieden sein können.

**2.** Tintenzusammensetzung nach Anspruch 1, wobei die radikalisch polymerisierbare Verbindung (A) nur (Meth)acrylsäureesterverbindungen umfasst.

**3.** Tintenzusammensetzung nach Anspruch 1 oder 2, wobei der Gesamtgehalt der Verbindung, die durch Formel (Ia) wiedergegeben ist, und der Verbindung, die durch Formel (Ib) wiedergegeben ist, 15 bis 55 Gewichtsprozent in der Tintenzusammensetzung beträgt.

4. Tintenzusammensetzung nach einem der Ansprüche 1 bis 3, wobei der Gehalt der Verbindung, die durch Formel (II) wiedergegeben ist, 5 bis 45 Gewichtsprozent in der Tintenzusammensetzung beträgt.

5. Tintenzusammensetzung nach einem der Ansprüche 1 bis 4, wobei sie als die radikalisch polymerisierbare Verbindung (A) wenigstens eine Art von (Meth)acrylsäureesterverbindung umfasst, die von der durch Formel (Ia), Formel (Ib) oder Formel (II) wiedergegebenen Verbindung verschieden ist.

6. Tintenzusammensetzung nach Anspruch 5, wobei sie eine (Meth)acrylsäureesterverbindung, die von der durch Formel (Ia), Formel (Ib) oder Formel (II) wiedergegebenen Verbindung verschieden ist, in einer Menge von 1 bis 30 Gewichtsprozent in der Tintenzusammensetzung umfasst.

7. Tintenzusammensetzung nach Anspruch 5 oder 6, wobei die radikalisch polymerisierbare Verbindung (A) eine polyfunktionelle (Meth)acrylsäureesterverbindung umfasst.

8. Tintenzusammensetzung nach Anspruch 5 oder 6, wobei die radikalisch polymerisierbare Verbindung (A) eine 3- bis 6-funktionelle (Meth)acrylsäureesterverbindung umfasst.

9. Tintenzusammensetzung nach Anspruch 7, wobei der Gehalt der polyfunktionellen (Meth)acrylsäureesterverbindung im Bereich von 1 bis 25 Gewichtsprozent des Gesamtgewichts der Tintenzusammensetzung liegt.

10. Tintenzusammensetzung nach einem der Ansprüche 1 bis 9, wobei die radikalisch polymerisierbare Verbindung (A) eine Verbindung umfasst, die durch Formel (Ib) wiedergegeben ist.

11. Tintenzusammensetzung nach einem der Ansprüche 1 bis 10, wobei der Gehalt des Radikalpolymerisationsinitiators (B) 1 bis 25 Gewichtsprozent, bezogen auf das Gesamtgewicht der Tintenzusammensetzung, beträgt.

12. Tintenzusammensetzung nach einem der Ansprüche 1 bis 11, wobei das Farbmittel (C) ein Pigment ist, und die Tintenzusammensetzung ein Pigmentdispergiermittel umfasst.

13. Tintenzusammensetzung nach einem der Ansprüche 1 bis 12, wobei der Gehalt des Farbmittels (C) 0,1 bis 30 Gewichtsprozent, bezogen auf das Gesamtgewicht der Tintenzusammensetzung, beträgt.

14. Tintenstrahlaufzeichnungsverfahren, umfassend:

($a^1$) einen Schritt des Ausstoßens der Tintenzusammensetzung nach einem der Ansprüche 1 bis 13 auf ein Aufzeichnungsmedium; und
($b^1$) einen Schritt des Härtens der Tintenzusammensetzung durch Bestrahlen der ausgestoßenen Tintenzusammensetzung mit aktinischer Strahlung.

**Revendications**

1. Composition d’encre comprenant :

(A) un composé radicalairement polymérisable ;
(B) un initiateur de polymérisation radicalaire ; et
(C) un colorant ;

le composé radicalairement polymérisable (A) comprenant au moins un type de composé représenté par la formule (Ia) et/ou de composé représenté par la formule (Ib) et au moins un type de composé représenté par la formule (II)

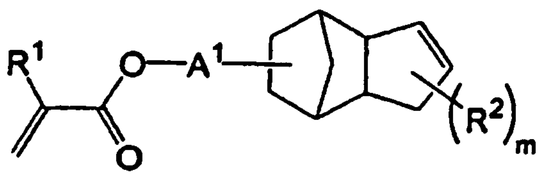

(Ia)

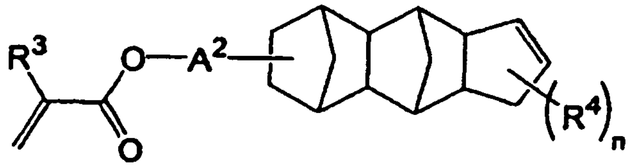

(Ib)

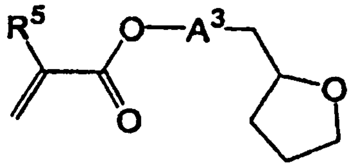

(II)

où $R^1$, $R^3$ et $R^5$ indiquent indépendamment un atome d'hydrogène ou un groupe méthyle, $A^1$ à $A^3$ indiquent indépendamment une liaison simple ou un groupe de liaison divalent, $R^2$ et $R^4$ indiquent indépendamment un substituant monovalent, m indique un nombre entier de 0 à 13, n indique un nombre entier de 0 à 19, lorsque m est un nombre entier de 2 à 13, les $R^2$ peuvent être identiques ou différents les uns des autres, et lorsque n est un nombre entier de 2 à 19 les $R^4$ peuvent être identiques ou différents les uns des autres.

**2.** Composition d'encre selon la revendication 1, dans laquelle le composé radicalairement polymérisable (A) comprend uniquement des composés d'ester d'acide (méth)acrylique.

**3.** Composition d'encre selon la revendication 1 ou 2, dans laquelle la teneur totale du composé représenté par la formule (Ia) et du composé représenté par la formule (Ib) est de 15 à 55 % en masse dans la composition d'encre.

**4.** Composition d'encre selon l'une quelconque des revendications 1 à 3, dans laquelle la teneur du composé représentée par la formule (II) est de 5 à 45 % en masse dans la composition d'encre.

**5.** Composition d'encre selon l'une quelconque des revendications 1 à 4, dans laquelle elle comprend comme composé radicalairement polymérisable (A) au moins un type de composé d'ester d'acide (méth)acrylique différent du composé représenté par la formule (Ia), la formule (Ib) ou la formule (II).

**6.** Composition d'encre selon la revendication 5, dans laquelle elle comprend un composé d'ester d'acide (méth) acrylique différent du composé représenté par la formule (Ia), la formule (Ib) ou la formule (II) à de 1 à 30 % en masse dans la composition d'encre.

**7.** Composition d'encre selon la revendication 5 ou 6, dans laquelle le composé radicalairement polymérisable (A) comprend un composé d'ester d'acide (méth)acrylique polyfonctionnel.

**8.** Composition d'encre selon la revendication 5 ou 6, dans laquelle le composé radicalairement polymérisable (A) comprend un composé d'ester d'acide (méth)acrylique 3- à 6-fonctionnel.

**9.** Composition d'encre selon la revendication 7, dans laquelle la teneur du composé d'ester d'acide (méth)acrylique polyfonctionnel se trouve dans l'intervalle de 1 à 25 % en masse de la masse totale de la composition d'encre.

**10.** Composition d'encre selon l'une quelconque des revendications 1 à 9, dans laquelle le composé radicalairement polymérisable (A) comprend un composé représenté par la formule (Ib).

**11.** Composition d'encre selon l'une quelconque des revendications 1 à 10, dans laquelle la teneur de l'initiateur de polymérisation radicalaire (B) est de 1 à 25 % en masse par rapport à la masse totale de la composition d'encre.

**12.** Composition d'encre selon l'une quelconque des revendications 1 à 11, dans laquelle le colorant (C) est un pigment et la composition d'encre comprend un agent dispersant un pigment.

**13.** Composition d'encre selon l'une quelconque des revendications 1 à 12, dans laquelle la teneur du colorant (C) est

de 0,1 à 30 % en masse par rapport à la masse totale de la composition d'encre.

**14.** Procédé d'enregistrement à jet d'encre comprenant :

($a^1$) une étape de décharge de la composition d'encre selon l'une quelconque des revendications 1 à 13 sur un support d'enregistrement ; et
($b^1$) une étape de durcissement de la composition d'encre par irradiation de la composition d'encre déchargée avec un rayonnement actinique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001525479 W
- JP 2004182930 A
- JP 2004514014 W
- JP 2006299117 A
- JP 2008075062 A
- US 3087962 A
- US 4097677 A
- JP 7159983 A
- JP 7031399 B
- JP 8224982 A
- JP 10000863 A
- JP 9134011 A
- JP 2004514014 A
- JP 47006416 B
- JP 47003981 B
- JP 47022326 B
- JP 47023664 B
- JP 57030704 A
- JP 60026483 B
- JP 60026403 B
- JP 62081345 A
- JP 1034242 B
- US 4318791 A
- EP 0284561 A1
- JP 2211452 A
- JP 61194062 A
- JP 2009597 B
- JP 2009596 B
- JP 63061950 B
- JP 59042864 B
- EP 104143 A
- US 4837124 A
- JP 2150848 A
- JP 2096514 A
- EP 370693 A
- EP 233567 A
- EP 297443 A
- EP 297442 A
- EP 279210 A
- EP 422570 A
- US 3902144 A
- US 4933377 A
- US 4760013 A
- US 4734444 A
- US 2833827 A
- US 4743528 A
- JP 63138345 A
- JP 63142345 A
- JP 63142346 A
- JP 46042363 B
- JP 52147277 B
- JP 52014278 B
- JP 52014279 B
- JP 4537377 B
- JP 4486516 B
- US 3567453 A
- US 4343891 A
- EP 109772 A
- EP 109773 A
- JP 63143537 A
- JP 59152396 A
- JP 61151197 A
- JP 63041484 A
- JP 2000249 A
- JP 2004705 A
- JP 1304453 A
- JP 1152109 A
- EP 0290750 A
- EP 046083 A
- EP 156153 A
- EP 271851 A
- EP 0388343 A
- US 3901710 A
- US 4181531 A
- JP 60198538 A
- JP 53133022 A
- EP 0199672 A
- EP 84515 A
- EP 199672 A
- EP 044115 A
- EP 0101122 A
- US 4618564 A
- US 4371605 A
- US 4431774 A
- JP 6418143 A
- JP 2245756 A
- JP 4365048 A
- JP 62006223 B
- JP 63014340 B
- JP 59174831 A
- GB 1388492 A
- JP 53133428 A
- DE 3337024
- JP 62058241 A
- JP 5281728 A
- DE 2641100
- DE 3333450
- DE 3021590

- DE 3021599
- JP 2002012607 A
- JP 2002188025 A
- JP 2003026978 A
- JP 2003342503 A
- JP 4420189 B
- JP 51082102 A
- JP 52134692 A
- JP 59138205 A
- JP 60084305 A
- JP 62018537 A
- JP 6433104 A
- JP 58185677 A
- JP 61190537 A
- JP 2000782 A
- JP 5197075 A
- JP 9034057 A
- JP 46002784 A
- JP 5194483 A
- US 3214463 A
- JP 48030492 B
- JP 56021141 B
- JP 10088106 A
- JP 4298503 A
- JP 8053427 A
- JP 8239368 A
- JP 10182621 A
- JP W8501291 B
- EP 223739 A
- EP 309401 A
- EP 309402 A
- EP 310551 A
- EP 310552 A
- EP 459416 A
- DE 3435443
- JP 54048535 A
- JP 62262047 A
- JP 63113536 A
- JP 63163351 A
- JP 2262654 A
- JP 2071262 A
- JP 3121449 A
- JP 5061166 A
- JP 5119449 A
- US 4814262 A
- US 4980275 A
- JP 62021572 A
- JP 62173463 A
- JP 62183457 A
- JP 57009053 B
- JP 62135826 A
- JP 2001049200 A
- US 6084250 A
- JP 60132767 A
- WO 9954415 A

**Non-patent literature cited in the description**

- *J. Chem. Soc., Chem. Commun.,* 1986, vol. 14, 1073-1074
- *New Journal of Chemistry,* 1993, vol. 17 (12), 835-841
- Kakyozai Handobukku. Taiseisha, 1981
- UV-EB Koka Handobukku (Genryohen. Kobunshi Kankoukai, 1985
- UV·EB Koka Gijutsu no Oyo to Shijyo. CMC, 1989, 79
- **E. Takiyama.** Poriesuteru Jushi Handobukku. The Nikkan Kogyo Shimbun Ltd, 1988
- **J. P. FOUASSIER ; J. F. RABEK.** *RADIATION CURING IN POLYMER SCIENCE AND TECHNOLOGY,* 1993, 77-117
- **Wakabayashi.** *Bull. Chem. Soc. Japan,* 1969, vol. 42, 2924
- **F. C. Schaefer et al.** *J. Org. Chem.,* 1964, vol. 29, 1527
- Ganryo no Jiten. Asakura, 2000
- **I Hashimoto.** Yuki Ganryo Handobukku. Color Office, 2006
- **W. Herbst ; K. Hunger.** Industrial Organic Pigments. Wiley-VHC, 1992
- **R. Sander et al.** *Journal of Polymer Society,* 1972, vol. 10, 3173